# EUROPEAN PATENT SPECIFICATION

(11) **EP 4 184 173 B1**
(45) Date of publication and mention of the grant of the patent: **09.12.2026**
(21) Application number: 21208792.8
(22) Date of filing: 17.11.2021
(51) Int. Cl.: G01N 35/02, G01N 35/00, G01N 35/04

(54) **AUTOMATED ANALYTICAL SYSTEM FOR PROCESSING BIOLOGICAL SAMPLES**
AUTOMATISIERTES ANALYSESYSTEM ZUR VERARBEITUNG BIOLOGISCHER PROBEN
SYSTÈME ANALYTIQUE AUTOMATISÉ POUR LE TRAITEMENT D'ÉCHANTILLONS BIOLOGIQUES

(43) Date of publication of application: 24.05.2023
(60) Divisional application: 26216578.0
(73) Proprietor: F. Hoffmann-La Roche AG, 4070 Basel (CH); Roche Diagnostics GmbH, 68305 Mannheim (DE)
(72) Inventor: BAGGIO, Fabian, 6343 Rotkreuz (CH); EGLI, Roman, 6343 Rotkreuz (CH); ETTEL, Christian, 6343 Rotkreuz (CH); GUT, Raphael, 6343 Rotkreuz (CH); HERMANN, Pius, 6343 Rotkreuz (CH); KORJAGIN, Nikifor, 6343 Rotkreuz (CH); MEIER, Alexander, 6343 Rotkreuz (CH); SCHLAUBITZ, Thomas, 6343 Rotkreuz (CH); SCHNEEBELI, Rolf, 6343 Rotkreuz (CH); SIEGENTHALER, Simon, 8902 Urdorf (CH); VICENTE LEITAO, Ivo Daniel, 6343 Rotkreuz (CH); VOLLENWEIDER, Stefan, 6343 Rotkreuz (CH)
(74) Representative: Merkel, Patrick

(56) References cited:
- EP-B1- 1 678 481
- EP-B1- 3 593 904
- WO-A1-2016/164473
- CN-A- 111 929 456
- GB-A- 2 537 887
- JP-A- 2012 132 925
- US-A1- 2016 178 654
- US-A1- 2018 372 768

## Description

### Field of the Invention

The present invention belongs to the field of systems and methods for conducting biological or biochemical assays. Within this field, it relates to an analytical system for processing biological samples in an automated manner following their introduction into the system.

### Background

The processing of biological samples is of considerable significance for analytical as well as diagnostic purposes. Especially the field of In-Vitro Diagnostics (IVD) requires consistent, reliable and precise handling of sample specimens in a regulated environment. In view of the oftentimes high throughput of clinical samples, ease of use and maximizing walk-away time are desirable since they provide a considerable relief for clinical technicians and other healthcare professionals.

In this respect, a high degree of automation is often desirable, albeit a balanced approach with regard to at least the option of manual intervention in some cases can be advantageous. The balance between consolidation and maximized throughput on the one hand and flexibility and customization on the other hand is of particular importance in the mid-throughput segment of clinical diagnostics. For instance, it may be advantageous to enable the processing of a large number of samples of a certain type in a batch, while maintaining the possibility to run different types of samples in mixed batches, prioritize runs requiring a short turnaround time (STAT), and the like.

Analytical systems such as, for example, the cobas^{®} 6800/8800 from the company Roche Diagnostics GmbH, are mainly intended for use in the high-throughput segment, while Point-of-Care (PoC) solutions such as the cobas^{®} LIAT from the same company serve the low-throughput segment with the possibility of individualized analysis.

There is a need in the art to provide balanced systems for mid-throughput purposes, providing a sensible mix between throughput and flexibility as outlined above.

The following patent documents are relevant prior-art: GB2537887A discloses a system and method for identifying sample containers, reagent containers, or racks using a movable camera/mirror arrangement in a loading module. WO2016164473A1 discloses reading machine-readable labels on sample receptacles while a sample rack is moved within a sample bay. US2018372768A1 discloses automated sample loading system including movable imaging devices and indicator lights for user feedback.

The presently claimed invention is set forth herein according to the independent method claim 1 and the independent system claim 7. The aspects and embodiments of the present invention are further described in the dependent claims.

### Short description of the figures

**Fig. 1** is a set of schematic drawings of the automated analytical system described herein.
**Fig. 2** schematically depicts the receiving bay of the automated analytical system disclosed herein.
**Fig. 3** features various views of the indicator system as disclosed herein.
**Fig. 4** provides a perspective view of the system and method for providing binding particles for the isolation of biological material as described herein.
**Fig. 5** provides a drawing of the transparent window of the automated analytical system as disclosed herein.
**Fig. 6** displays the system for cooling reagents for conducting biological assays as herein disclosed.
**Fig. 7** is a set schematic drawings of the thermal cycler for incubating biological samples as disclosed herein.
**Fig. 8** schematically depicts the flexibly mounted pipet tip rack as described herein.
**Fig. 9** provides a flow chart displaying the steps of the method for monitoring a valve system in the automated analytical system as described herein.

### Detailed description

The present disclosure describes aspects of an automated analytical system, also termed automated analytical instrument, analytical instrument, or analyzer. Such an instrument can perform assays on biological samples, especially liquid biological samples, for instance, in the field of clinical diagnostics. For example, in the clinical laboratory context, the analyzer can be configured to perform multistep analytical processes - such as nucleic acid testing - that involve adding substances such as samples, solid supports, buffers, oil, primers, polymerases, nucleotides, labels, probes, or other reaction fluids, to and/or removing substances from receptacles, agitating receptacles to mix the contents thereof, maintaining and/or altering the temperature of the contents of the receptacles, heating or cooling the contents of the receptacles, altering the concentration of one or more content components of the receptacles, separating or isolating constituent components of the contents of the receptacles, detecting an electromagnetic signal emission (for example, light) from the contents of the receptacles, deactivating or halting an ongoing reaction, or any combination of two or more of such processes.

The analyzer is at least partially automated to perform the desired analytical or pre-analytical processes. Accordingly, the automated analytical system may automatically identify the contents of a sample receptacle and the assay to perform. For example, the analyzer may read labels such as a barcode or an RFID tag on the sample receptacle to identify the type of sample in the receptacle and the assay to perform.

In the context of the analyzer described herein, a sample receptacle needs to be introduced into the housing of the automated analytical system in order for a sample to be processed. To this end, several manual and/or automated measures are performed.

A first aspect described herein is therefore a method according to claim 1 for introducing a sample rack holding a plurality of sample receptacles with biological samples into a sample receiving bay in a housing of an automated analytical system.

Also described herein without being part of the presently claimed invention is a method for introducing a sample rack holding a plurality of sample receptacles with biological samples into a sample receiving bay in a housing of an automated analytical system the method comprising:
a) manually moving the sample rack from a loading position towards a processing position along a lane in the sample receiving bay;
b) pausing the movement when the sample rack arrives at a focusing position defined by a proximal stopping element between the loading position and the processing position;
c) moving a reader within essentially the same horizontal plane as the lane to focus the reader onto the lane;
d) resuming the movement of the sample rack past the proximal stopping element and detecting features of the sample rack and/or the plurality of sample receptacles by the reader during the movement, until the sample rack reaches the processing position defined by a distal stopping element;
e) positioning, detecting and locking the sample rack in the processing position;
f) processing the biological samples in the sample receptacles.

The method described herein according to claim 1 brings about various advantages. For instance, the introduction of the sample racks into the sample receiving bay of the automated analytical system is secured by means of multiple checkpoints.

The manual movement of a sample rack along its lane has proven to be preferable over an automated transport in many situations. For instance, when the user places the rack on a lane in the loading position, it is often the case that an automated intake of the rack at a predefined - typically relatively slow - speed is perceived as cumbersome rather than helpful. Also, manual intervention during an automated movement - willing, out of impatience, or inadvertent - may lead to damage of the motor driving the transfer. On the other hand, manual insertion of a rack into the sample receiving bay may introduce a source of potential errors. The user may, for instance, move the rack at a speed too high for a barcode reader or camera to focus on the correct lane and thus sample rack and/or sample receptacles, which in turn may lead to reading errors. Solutions found in the art include a rigid setup of tightly fitting guide rails or the like, which however requires a greater force to be applied by the user to overcome the resulting friction. Such a solution is not only slow, but also puts an additional burden on the user.

Pausing the movement according to the presently disclosed method with the help of a proximal stopping element combines the advantages of manual and automated insertion: On the one hand, the rack can be inserted swiftly before and after reaching the focusing position, while the reader is given sufficient time to focus on the rack in the loaded lane while it is located in the focusing position, thus minimizing the risk of reading errors.

A "sample rack", as used herein, means a sample receptacle holder. In the field of In-Vitro-Diagnostics, the dimensions and shapes are typically standardized. In some embodiments not recited in the claims, a sample rack holds a plurality of sample receptacles arranged sequentially in a line within corresponding dedicated sample receptacles slots.

A "loading position" is an initial position in which a sample rack finds itself at the beginning of its insertion into the sample bay. For instance, in the case of a sample rack with a linear arrangement of slots for sample receptacles as described above, the user may hold the rack at one end, for example, by a handle, and place the opposite end at the start of a corresponding lane forming part of the sample receiving bay. Starting from this loading position, the movement towards the focusing position and ultimately the processing position is initiated.

The "focusing position" is an intermediate position between the loading position and the processing position. Defined by a proximal stopping element, this intermediate or transient position allows for the reader to focus on a loaded lane and thus the corresponding sample rack and/or the sample receptacles within.

The "proximal stopping element" as used herein can comprise or consist of various elements, for example, a baffle, a depression in or protrusion from the bottom of the lane, a stop lug, a spherical piece, an injection-molded piece, a bolt, a magnet, a catch pin, a catch plate, or a hook. As it is connected to the focusing position, being an intermediate or transient position, the proximal stopping element does not bring about an arrest or a lock as described herein with regard to the processing position. As it is intended to cause a pausing of the movement of the sample rack, it may herein also be referred to as a "delaying element". In this context, if this element is a magnet, it is preferably a non-permanent magnet such as an electromagnet, which can be switched on and off. Likewise, in case it is a bolt, that bolt is preferably retractable from the path of the rack on its lane, and so forth. In some embodiments, the proximal stopping element is a baffle on the lane surface, indicating by its physical resistance that the rack has arrived at the focusing position and thus prompting the user to halt the movement at this point. In some embodiments, the proximal stopping element is an injection-molded piece, for example, an injection-molded baffle.

When the sample rack reaches the focusing position, it is in some embodiments detected to be in this position, and a signal is sent to the reader, or to a control unit controlling the reader.

Detection may be performed, for example, by means of a sensor. In such embodiments, a sensor detects that the sample rack is in the focusing position and triggers sending of the signal to the reader. Such a sensor is in some embodiments not recited in the claims an inductive sensor, a pressure sensor, an acceleration sensor, or a light barrier. For instance, the sensor may detect a dedicated detection element comprised by the sample rack upon reaching the focusing position. A detection element may be a conductive element such as a flag or a platelet, which may be detected by a proximity sensor in the form of an inductive sensor.

Once the reader is properly focused, the movement of the rack on towards the processing position can be resumed. The proper focusing is detected and indicated to the user by a signal such as to prompt the user to resume the movement. Detection is carried out by a control unit of the reader, indication may be via an optical signal, for instance, by a lamp such as an LED, or an acoustic signal such as a chime, or the like. As indicated above, resuming the movement may go along with - or be preceded by - removing the proximal stopping element from the path of the sample rack on its lane, or overcoming the resistance of the proximal stopping element by, for example, applying a greater manual force or performing a specific movement such as tilting or lifting the sample rack. During the onwards movement, the reader records information about the sample rack and/or the sample receptacles and/or their contents. For instance, a sample rack may comprise sample receptacles having identifiers such as one- or two-dimensional barcodes. Therefore, in some embodiments not recited in the claims, the reader in step d) reads out an identifier on a sample receptacle and/or the sample rack. In some embodiments not recited in the claims, the reader comprises a light source, for example, an LED. The light source may be axially aligned with the optical path of the reader, especially when the reader is a barcode scanner like a laser barcode scanner or a camera that reads the barcode and/or detects other features of the sample rack and/or sample receptacles. In some embodiments not recited in the claims, a processing and/or control unit decodes the read barcode to obtain information therefrom and associate the information with a corresponding sample receptacle. The information can then be exploited for performing assays on the biological sample material and for identifying the contents of the sample receptacles, for example, patient information such as patient identification numbers or the like. Alternatively or additionally, the reader may detect a physical feature of a sample receptacle and/or the sample rack. In some embodiments not recited in the claims, the reader measures a physical parameter of a sample receptacle and/or the biological sample therein. In some embodiments not recited in the claims, the physical parameter is the diameter of a sample receptacle. For example, by measuring the diameter of the sample receptacle such as an elongate sample tube at its top end, it may be determined whether a cap is present on the top of the sample receptacle. This correlation is exploitable when the dedicated cap has a diameter different from the diameter of the sample receptacle itself. In many cases, the diameter of the cap exceeds the diameter of the sample receptacle. However, embodiments not recited in the claims are conceivable where the diameter of the dedicated cap is smaller than the diameter of the corresponding sample tube. Alternatively or additionally, the reader may be a camera having a processor for processing the collected visual data. The said processor may recognize features such as a cap by properties other than its diameter and thereby determine its presence or absence on the sample receptacle.

Upon reaching the processing position defined by the distal stopping element, several actions are performed, which are important for ensuring reliability of the method and providing a robust starting point for downstream processing.

Positioning of the sample rack in the processing position means alignment of the rack with respect to its surroundings. In particular, downstream processing of, for instance, a biological sample contained in one or more of the sample receptacles in the sample receiving bay of the automated analytical system described herein may include dedicated elements or modules within the housing of the analyzer, which interact with the sample rack, the sample receptacles, and/or their contents. For example, a decapper may remove a cap from a sample receptacle. Such a cap may be a screw cap or any other suitable cap known in the art. The decapper can, for instance, be a robotic arm configured to perform a rotatory movement such as to unscrew a screw cap. In some embodiments not recited in the claims, a capper or re-capper is also present within the housing of the automated analytical system disclosed herein. In some embodiments not recited in the claims, the decapper and the (re-)capper are the same module or device. Since a capper or decapper relies on correct spatial alignment with the corresponding cap and hence the sample receptacle it covers, the proper positioning of the sample rack in the processing position has a crucial role. Further, a pipettor or pipetting module may interact with the samples in the receptacles in the case of liquid biological samples. In order for a pipettor to operate smoothly, careful alignment between sample receptacle and pipettor has to be ensured. For instance, if an elongate sample receptacle were tilted with its top opening towards a horizontal direction, the pipettor, for example, comprising a pipetting needle or a disposable pipet tip, may be at risk of colliding with an inner side wall of the sample receptacle at too great a distance from the bottom of the sample receptacle, thus jeopardizing a smooth and complete aspiration of the liquid sample by the pipettor. Moreover, such a collision may lead to a system error and could cause a run abort and even jamming or damaging of the pipettor. Also, in some embodiments not recited in the claims, liquid level detection (LLD) such as capacitive liquid level detection (cLLD), ultrasonic LLD, electric LLD or the like are performed in the processing position by a pipettor. LLD could likewise be interfered with by a misalignment of the sample rack and its sample receptacles with the LLD device, which is, in some embodiments not recited in the claims, integrated into a pipettor.

In this context, careful positioning of the sample rack in the processing position enables the appropriate alignment of components such as a capper/decapper, a pipettor, or the like, with the sample receptacles. This is especially important in embodiments where the sample receptacles are tightly held in place in their dedicated slots of the sample rack.

A "pipettor" is a device allowing for the automatic withdrawing and/or dispensing of volumes of fluids such as for fluid transfer or sip and spit mixing. In the context described herein, these fluids include a liquid biological sample, reagents used for processing the liquid biological sample, cleaning solutions, dilution buffers, processed liquids, liquids containing a processed analyte, or the like. The liquids may be withdrawn and dispensed from any of the following positions/vessels: sample tubes, intermediate process tubes, reagent containers, waste containers or positions, tip-wash-stations, output vessels, reaction tubes, and the like. In particular, the pipettor may be used for aspirating the fluid biological sample from the sample receptacles as described herein and dispensing them into receptacles for downstream processing such as, for example, isolation and/or analysis. Furthermore, the pipettor may be used for aspirating and dispensing reagents such as sample preparation reagents, suspensions of binding particles for binding a biological target material, reagents for amplification and/or detection of an analyte, or the like. The pipettor is in some embodiments not recited in the claims driven by a pneumatic or hydraulic system. As a hydraulic liquid, the pipettor may in some embodiments not recited in the claims use water or a commonly used reagent as known to the person of skill in the art.

The pipettor may comprise one or more reusable washable needles such as a steel needle, or use disposable pipet tips. The pipettor may be mounted to a transfer head, also referred to as pipetting head, that can be moved in one or two directions of travel in a plane, for example, with guide rails and a third direction of travel orthogonal to the plane, with a spindle drive or the like. For instance, the pipettor may be moved horizontally between a primary sample receptacle such as a tube and a multiwell plate or another target position, and vertically in order to withdraw or dispense the liquid biological sample or other liquids. The pipettor may be integrated, i.e. built into a work cell or be a module of a system operatively connected to a work cell. The position and operation (including parameters such as volume, flow rate, direction of flow, or the like) of the pipettor may be controlled by a control unit, as described in the following.

A "control unit" controls an automated system, such as the automated analytical system described herein, in a way that the necessary steps for the processing protocols are conducted by the automated system. That means the control unit may, for example, instruct the automated system to conduct certain pipetting steps with a pipettor to mix the liquid biological sample with reagents, or the control unit controls the automated system to incubate the biological sample or reagents or mixtures of both for a certain time at a certain temperature, or the control unit controls the precise movements of a gripper, the reader disclosed herein including its focusing on the sample rack in the correct lane, the positioning element described herein, the detecting element described herein, the locking element described herein, the indicator system described herein, the shaker described herein, the transparent window described herein, the moveable platform described herein, the loading platform described herein, the heating element described herein, the valve system described herein, and/or the pipettor described herein, or other movements or related parameters of the automated analytical system described herein. The control unit may receive information from a data management unit (DMU) regarding which steps need to be performed with a certain sample. In some embodiments not recited in the claims, the control unit might be integral with the data management unit or may be embodied by a common hardware. The control unit may, for instance, be embodied as a programmable logic controller running a computer-readable program provided with instructions to perform operations in accordance with a process operation plan. In particular, the control unit may include a scheduler, for executing a sequence of steps such as the movements described above within a predefined time. The control unit may further determine the order of samples to be processed according to the assay type, urgency, and the like. The control unit may also receive data from a detection unit related to a measurement of parameter of the sample.

A "data management unit" is a computing unit for storing and managing data. This may involve data relating to the liquid sample to be processed by the automated system, or data relating to the steps to be carried out by certain modules of the automated system. The data management unit may be connected to an LIS (laboratory information system) and/or an HIS (hospital information system). The data management unit (DMU) can be a unit within or co-located with the automated system it interacts with. It may be part of the control unit. Alternatively, the DMU may be a unit remotely located from the automated system. For instance, it may be embodied in a computer connected to the automated system, for example, to the control unit of the automated analytical system described herein.

As outlined above, in addition to the importance of ascertaining the correct coordinates of the sample rack and thus the sample receptacles, it is also advantageous to provide their proper orientation. For instance, if the sample rack is placed correctly with regard to its coordinates on an x-, y- and z-axis, but is skewed within this specific place, other components like a capper, pipettor, gripper or the like may not be able to smoothly interact with the sample receptacles. The lane on which the sample rack is placed and moved contributes to positioning by preferably being a plane, even and smooth surface substantially orthogonal to the gravitational axis. In some embodiments not recited in the claims, positioning of the sample rack in the processing position comprises alignment of the sample rack with respect to all six spatial degrees of freedom.

In some embodiments not recited in the claims, positioning of the sample rack in the analysis position is carried out by one or more positioning elements selected from the group of a fin, a rib, a trapezoid, a guide rail, a catch, a spring catch, a latch, a rotary latch, or a bracket such as a U-shaped bracket. In some embodiments not recited in the claims, the positioning element is a guide rail integral to the lane. In some embodiments not recited in the claims, the positioning element is a combination of two or more of these elements. In some embodiments not recited in the claims, the combination is a combination of a guide rail, a rotary latch and a spring catch. In some embodiments not recited in the claims, the combination is a combination of a guide rail and the distal stopping element. In a more specific embodiment, the distal stopping element is a bracket. The bracket may be, for example, embodied as a U-shape.

Having reached the processing position, the presence of the sample rack is further detected in this position. Such detection can be achieved, for example, by a detecting element such as a sensor or a plurality of sensors. In some embodiments not recited in the claims, detection of the sample rack in the processing position is carried out by one or more detecting elements selected from the group of a light barrier, for example, a forked light barrier, an inductive sensor, or a touch sensor. As in the case of the focusing position, a dedicated element comprised by the sample rack may interact with its counterpart of the sample receiving bay. In some embodiments not recited in the claims, a conductive element comprised by the sample rack induces a detectable current in an inductive sensor placed on or in close proximity to the respective lane in the processing position. Also in some embodiments not recited in the claims, a mechanical element comprised by the sample rack interrupts a light barrier such as a forked light barrier upon rotating when positioning the sample rack. In some embodiments not recited in the claims, the mechanical element is a protrusion such as a latch, a knob, or the like. In some embodiments not recited in the claims, the positioning element and the detecting element are combined in a single structure. In the embodiment described above wherein the positioning element is a bracket such as a U-shaped bracket, the sidepieces of the bracket are in some embodiments not recited in the claims the ends of a forked light barrier. More precisely, one sidepiece of the U-shape comprises the light source such as a laser, and the opposing sidepiece of the U-shape comprises the detector. In such embodiments, the forked light barrier contributes, as a positioning bracket, to aligning the rack in the processing position, and additionally carries out detection by means of the light beam.

Locking the sample rack in the processing position is of equal significance as the positioning step, since without locking, the careful positioning might be unstable and could be disturbed or even utterly disrupted by mechanical influences such as interaction with a gripper or a pipettor. The locking step therefore arrests the sample rack in the properly positioned alignment. In some embodiments, the positioning is secured with regard to all six spatial degrees of freedom.

In some embodiments not recited in the claims, the locking is carried out by one or more locking elements selected from the group of a locking bolt, a locking pin, a cam lock, a magnet, a solenoid lock, a bar, a bracket, or a catch.

For example, a locking bolt may arrest the sample rack in the processing position by engaging a corresponding recess or through-hole of the sample rack.

In some embodiments not recited in the claims, locking the sample rack in the processing position is carried out by a solenoid lock. In such embodiments, the solenoid lock may be activated upon detection of the rack in the processing position, and the solenoid may move into a locked configuration. In some of these embodiments not recited in the claims, the solenoid lock may engage the sample rack by being vertically pushed through a hole in the sample rack, for example, upwards from below the lane into and optionally through the hole in the sample rack, thereby locking the sample rack in place. In other embodiments not recited in the claims, the solenoid lock is arranged underneath the lane and essentially parallel thereto. In such embodiments, it is configured to perform a horizontal movement and thereby lift a vertical locking bolt through a hole in the sample rack via a wedge mechanism. Thus, in some embodiments not recited in the claims, the locking element is a combination of a horizontal solenoid lock and a vertical locking bolt.

Also in some embodiments not recited in the claims, the locking element interacts directly with the positioning and/or the detecting elements. For example, in embodiments where a rotary latch positions the sample rack in the processing position, a locking element, for example, a solenoid lock, may lock the rotary latch in the processing position. In embodiments where a rotary latch for positioning the sample rack interrupts a light barrier such as a forked light barrier upon rotating when positioning the sample rack, a locking element such as a solenoid lock may lock the rotary latch in the processing position, such that the rotary latch is locked in a position where it interrupts the light barrier.

Since the user will in many cases want to remove the sample rack from the analyzer after the samples therein have been processed, the lock is in some embodiments not recited in the claims reversible. For instance, in the above-described embodiments involving a solenoid lock, the solenoid may be reset to an open configuration such that the user can retrieve the sample rack from the sample receiving bay.

Processing the biological samples in the sample receptacles may comprise a variety of measures. Typically, especially in the case of biological such as clinical sample material, the sample is subjected to a preparation process in which a certain type of analyte is enriched or isolated. The sample material may be suspected to contain a biological target material.

"Biological target material" or "biological material", in the sense of this disclosure, comprises all kinds of biological molecules, for example proteins or nucleic acids, but also other molecules occurring in nature or being derivatives or synthetic analogues or variants thereof. Furthermore, the term "biological material" comprises viruses and eukaryotic and prokaryotic cells. In some embodiments not recited in the claims, the biological target material is nucleic acids such as DNA, RNA or PNA. The DNA can be, for example, viral DNA, genomic DNA or plasmid DNA. The biological target material can be native or modified. Native biological material is not irreversibly altered as compared to the respective naturally occurring biological material, such as DNA or RNA isolated from organisms. Modified biological material comprises e.g. biotinylated molecules such as nucleic acids or proteins.

As used herein, the term "biological sample" refers to a material that may potentially contain an analyte of interest. The same applies to a "liquid biological sample" which can be derived from any biological source, such as a physiological fluid, including blood, saliva, ocular lens fluid, cerebrospinal fluid, sweat, urine, stool, semen, vaginal fluid, milk, ascites fluid, mucous, synovial fluid, peritoneal fluid, amniotic fluid, tissue, cultured cells, or the like. The test sample can be pretreated prior to use, such as preparing plasma from blood, diluting viscous fluids or diluting in general, lysis or the like. Methods of treatment can involve filtration, distillation, concentration, inactivation of interfering components, and the addition of reagents. A biological sample may be used directly as obtained from the source or used following a pretreatment to modify the character of the sample. In some embodiments not recited in the claims, an initially solid or semi-solid biological material is rendered liquid by dissolving or suspending it with a suitable liquid medium. In further embodiments not recited in the claims, the sample may have been pre-treated with, for example, a washing buffer. In some embodiments not recited in the claims, the biological sample is suspected to contain a certain antigen or nucleic acid.

In the context of the present disclosure, the terms "isolation", "purification" or "extraction" of a biological target material relate to the following: Before biological target materials like, for instance, nucleic acids may be analyzed in a diagnostic assay by amplification or the like, they typically have to be purified, isolated or extracted from biological samples containing complex mixtures of different components. Biological target material such as cells (human or exogenous) or viruses contains a great variety of different biomolecules, and in many cases only a subgroup of these molecules are of interest for a given type of analysis. For instance, nucleic acids to be analyzed by PCR in a downstream process may need to be separated from the other biomolecules.

Typically, one of the first steps comprises releasing the contents of cells or viral particles, for example, by using enzymes and/or chemical reagents. This process is commonly referred to as lysis. For enrichment of the analyte in question in the lysate, one useful procedure for binding nucleic acids entails the selective binding of nucleic acids to glass or silica surfaces of binding particles such as magnetic particles in chaotropic salt solutions and separating the nucleic acids from contaminants such as agarose, proteins or cell debris. Such a composition may be especially useful when nucleic acids are bound to glass surfaces, as the composition already contains a chaotropic agent which is usually necessary for such binding.

Further, the thus purified biological material may in some embodiments not recited in the claims be subjected to biological or biochemical analysis. Such downstream analysis of the biological target material may include Polymerase Chain Reaction (PCR) or sequencing of nucleic acids, or antibody-mediated assays for proteins such as ELISA, or the like. In some embodiments of the method described herein, the analysis comprises qualitative and/or quantitative detection of nucleic acids by amplification. In some embodiments not recited in the claims, the amplification technique is PCR. In such embodiments, the automated analytical system described herein may comprise a thermal cycler. Other amplification techniques, such as isothermal amplification (LAMP, TMA, and the like), LCR, etc. may be applied for analyzing a target nucleic acid. In some embodiments not recited in the claims, the analysis comprises nucleic acid sequencing.

In the context of performing the method for introducing a sample rack holding a plurality of sample receptacles into a sample receiving bay in a housing of an automated analytical system, also described herein is the corresponding automated analytical system.

Therefore, an aspect disclosed herein is an automated analytical system for processing biological samples according to independent claim 7.

Also described herein without being part of the presently claimed invention is an automated analytical system for processing biological samples, the system comprising:
- a housing
- a sample rack configured to hold a plurality of sample receptacles;
- a sample receiving bay within said housing, the sample receiving bay having a plurality of lanes arranged substantially parallel to each other and configured to accommodate the sample rack configured to hold a plurality of sample receptacles;
- a proximal stopping element defining a focusing position on a lane;
- a reader within essentially the same horizontal plane as the lanes;
- a distal stopping element defining a processing position on a lane;
- a positioning element configured to position the sample rack in the processing position;
- a detecting element configured to detect the sample rack in the processing position;
- a locking element configured to lock the sample rack in the processing position;
- a processing module configured to process the biological samples in the sample receptacles.

The terms and embodiments for the automated analytical system for processing biological samples according to claim 7 are the same as the terms and embodiments described in the context of the method according to claim 1, as disclosed herein, for introducing a sample rack holding a plurality of sample receptacles into a sample receiving bay in a housing of the automated analytical system.

Another aspect described herein is an automated analytical system for processing biological samples according to claim 7, the system further comprising
- an indicator system arranged along each of the lanes in alignment with dedicated sample receptacle slots of a sample rack when the sample rack is located in an inspection position, wherein the indicator system is configured to indicate a status of sample receptacles in their respective sample receptacle slots.

This automated analytical system is especially advantageous with respect to providing the user with the possibility to perform manual processing on sample receptacles that contain samples requiring corrective measures. For instance, biological sample matrices such as whole blood may be prone to forming clots, the latter possibly interfering with a smooth processing and, in some embodiments not recited in the claims, analysis of the sample in question. In order for the user to apply the appropriate corrective measure, such as dissolving the clot in the present example, the system needs to indicate which one or which ones of the sample receptacles among the plurality of sample receptacles held in a given sample rack contain such a sample causing problems for the processing module.

Common approaches in the art include, for instance, displaying the position of an affected sample receptacle in a sample rack on an external display. Such a solution is cumbersome and error-prone, as the user must switch their gaze between the display and the rack in order to identify the affected sample receptacle in the rack as indicated on the screen.

The indicator system of the automated analytical system disclosed herein provides an elegant and uncomplicated remedy for such problems by locally flagging the slots of a sample rack holding an affected sample receptacle. Here, the user is able to directly identify such a slot of a sample rack *in situ* by means of the signal in the immediate proximity of the affected sample receptacle.

In this context, the "inspection position" is a position of a sample rack on the surface of the sample receiving bay, in which the rack with its sample receptacles is accessible to the user, for example, through an interface such as an openable window of the automated analytical system.

In some embodiments, the indicator system comprises a light source on or within the surface of the sample receiving bay, the light source being optically coupled via an optical light guiding system to light emission windows located in close proximity to the dedicated sample receptacle positions of the sample rack.

A light signal is very convenient for the user in order to spot a problematic sample. The user may directly perform manual intervention on the spot and, for example, remove a clot within a sample in an affected sample receptacle while the latter is held within its dedicated slot of the sample rack. Throughout this process, in some embodiments not recited in the claims, the light signal indicating the respective sample receptacle remains active, thus greatly reducing the risk of the user processing the wrong sample in a different receptacle.

Physically separating the light source from the sample rack confers the advantage of keeping the complexity of the sample racks at a relatively low level. A sample rack with integrated light sources would require a power source like a battery or the like. This would render the respective sample rack not only more expensive and complex, but also more sensitive to outer influences. For example, the cleaning of a sample rack, especially in a clinical environment, often includes subjecting it to harsh conditions in order to remove potentially harmful contaminants such as pathogens that may be present in the sample material. Immersion of a sample rack, for instance, in a solution containing bleach, could damage light sources and batteries or the like integrated into the sample rack. An optical light guiding system as described herein can overcome such limitations.

The optical light guiding system may comprise various components suitable for guiding light from the light source to the respective emission windows. For example, in the case of a single light source on or within the moveable platform, an arrangement of optical fibers may be employed in order to guide the light to its dedicated output locations. In such embodiments, the light emitted by the single source is split into a plurality of individual optical fibers each connecting the light source to a dedicated light emission window. Such fibers may comprise materials conferring flexibility, for example, polymers. Corresponding fiber optic cables may be arranged throughout a sample rack with their outputs facing the light emission windows and their inputs arranged in close proximity to the light source.

In some embodiments not recited in the claims, the light source comprises multiple individual light sources such as LEDs, each of the individual light sources being optically coupled via the optical light guiding system to the light emission windows.

The fiber optics solution is likewise conceivable in the case of such multiple individual light sources, wherein the number of the light sources is smaller than or equal to the number of corresponding light emission windows.

In some embodiments not recited in the claims, the number of the individual light sources along a lane matches the number of dedicated sample rack positions and/or light emission windows of the sample rack.

Particularly in cases where the number of the individual light sources is equal to the number of corresponding light emission windows, the optical light guiding system may comprise rigid light guiding elements. In some embodiments not recited in the claims, the individual light sources are positioned essentially directly underneath the dedicated sample receptacle slots and corresponding light emission windows of the sample rack in the inspection position.

In such embodiments not recited in the claims, light guiding rods may be arranged substantially parallel to the sample receptacles slots in the sample rack. Also in some embodiments not recited in the claims, the optical light guiding system consists of tunnels arranged substantially parallel to the sample receptacles slots in the sample rack. This simpler solution may reduce the light output at the emission windows, but further reduce the complexity of the sample racks. For instance, with respect to the sample rack cleansing methods described herein, tunnels are a very robust solution.

In some embodiments not recited in the claims, the light emission windows are configured to emit light of an indicative color. In simple cases, the light emission windows may comprise a filter such as a transparent screen of a colored material. In more complex embodiments not recited in the claims, multiple light sources emit light of different wavelengths of the visible spectrum such as to produce light beams of different colors. The different colors may indicate different conditions in which the sample of the indicated sample receptacle finds itself. For instance, a sample may be clotted as described above and thus require mixing or re-pipetting by the user. The sample rack slot holding the respective sample receptacle may be indicated by, for example, a red light. A sample receptacle not requiring any intervention by the user may be indicated by a green light. A slot holding an incorrectly capped sample receptacle might be indicated by an orange light, and so forth.

In this context, a method is described herein for processing biological samples, the method comprising the steps:
a) introducing a sample rack holding a plurality of sample receptacles into the automated analytical system described above;
b) indicating, by the indicator system, a sample in a sample receptacle within a dedicated slot of the sample rack to require inspection;
c) inspecting the corresponding sample and, if required, performing a corrective measure on the sample.

In certain situations, it is desirable to create additional working space such as an additional working surface outside of the housing of the automated analytical system. For instance, if samples are to be manipulated outside of the housing, the user will appreciate a convenient and easy-to-reach platform on which to store the sample receptacles, for instance, in their sample rack, so as to perform manual steps on them and then re-introduce them into the housing.

Therefore, a related aspect described herein is an automated analytical system for processing biological samples according to claim 7, the system further comprising
- a moveable platform configured to be extended horizontally out of the housing so as to form an extension of the plurality of lanes outside of the housing, the platform having positioning elements configured to position a sample rack on the platform in an exposed inspection position;
- an indicator system arranged along each of the extended lanes in alignment with dedicated sample receptacle slots of a sample rack when the sample rack is located in the exposed inspection position, wherein the indicator system is configured to indicate a status of sample receptacles in their respective sample receptacle slots.

Since the moveable platform is extendable outside the housing, the "exposed inspection position" is in some embodiments not recited in the claims such that the rack is not covered by the housing. In practice, the user may pull the moveable platform towards themselves until reaching a mechanical stop, for example, until the platform is fully extended but still attached to the sample receiving bay of the automated analytical system. The user may then retrieve a sample rack from the sample receiving bay by pulling it out of the housing while sliding it along its lane and onto the extended moveable platform. The sample rack may then reach a mechanical stop such as a baffle, a hook, or the like, upon reaching the exposed inspection position in which the rack is readily accessible to the user. As an additional advantage, the user also benefits from an unobstructed view on the signals of the indicator system outside of the housing of the automated analytical system.

The "moveable platform", as indicated above, may be extendable and retractable like a drawer. In some embodiments not recited in the claims, the platform is extendable in a linear movement substantially parallel to the lanes. In such embodiments not recited in the claims, the platform may be slidably suspended between guide rails. In other embodiments not recited in the claims, the platform may be extended in a rotary movement, comprising pulling the platform towards the user in front of the analyzer at the left or right-hand side of the platform until reaching an angle of substantially 90°, then arresting the platform in the respective position. In some embodiments not recited in the claims, the platform is arranged underneath the lanes within the sample receiving bay in a retracted configuration. Upon extension, the moveable platform is extendable beyond the lanes within the sample receiving bay and, in this fully extended configuration, arrestable by means of an upward movement so as to form an even extension with respect to the lanes within the sample receiving bay.

In this context, a method is described herein for processing biological samples, the method comprising the steps:
a) introducing a sample rack holding a plurality of sample receptacles into the sample receiving bay of the automated analytical system described above;
b) extending the moveable platform outside the sample receiving bay and thus outside the housing;
c) extending the sample rack to the exposed inspection position;
d) indicating, by the indicator system, a sample in a sample receptacle within a dedicated slot of the sample rack to require inspection;
e) inspecting the corresponding sample and, if required, performing a corrective measure on the sample.
f) returning the rack into the sample receiving bay within the housing;
g) returning the moveable platform to its retracted position.

The advantages of the different automated analytical systems described above may be combined by uniting their features.

Therefore, another aspect described herein but not part of the presently claimed invention is an automated analytical system for processing biological samples, the system comprising:
- a housing
- a sample rack configured to hold a plurality of sample receptacles;
- a sample receiving bay within said housing, the sample receiving bay having a plurality of lanes arranged substantially parallel to each other and configured to accommodate the sample rack configured to hold a plurality of sample receptacles;
- a proximal stopping element defining a focusing position on a lane;
- a reader within essentially the same horizontal plane as the lanes;
- a distal stopping element defining a processing position on a lane;
- a positioning element configured to position the sample rack in the processing position;
- a detecting element configured to detect the sample rack in the processing position;
- a locking element configured to lock the sample rack in the processing position;
- an indicator system arranged along each of the lanes in alignment with dedicated sample receptacle slots of a sample rack when the sample rack is located in an inspection position, wherein the indicator system is configured to indicate a status of sample receptacles in their respective sample receptacle slots;
- a processing module configured to process the biological samples in the sample receptacles.

As described above, additional convenient working space may be advantageous, such that another aspect described herein but not part of the presently claimed invention is an automated analytical system for processing biological samples, the system comprising:
- a housing
- a sample rack configured to hold a plurality of sample receptacles;
- a sample receiving bay within said housing, the sample receiving bay having a plurality of lanes arranged substantially parallel to each other and configured to accommodate the sample rack configured to hold a plurality of sample receptacles;
- a proximal stopping element defining a focusing position on a lane;
- a reader within essentially the same horizontal plane as the lanes;
- a distal stopping element defining a processing position on a lane;
- a positioning element configured to position the sample rack in the processing position;
- a detecting element configured to detect the sample rack in the processing position;
- a locking element configured to lock the sample rack in the processing position;
- a moveable platform configured to be extended horizontally out of the housing so as to form an extension of the plurality of lanes outside of the housing, the platform having positioning elements configured to position a sample rack on the platform in an exposed inspection position;
- an indicator system arranged along each of the extended lanes in alignment with dedicated sample receptacle slots of a sample rack when the sample rack is located in the exposed inspection position, wherein the indicator system is configured to indicate a status of sample receptacles in their respective sample receptacle slots;
- a processing module configured to process the biological samples in the sample receptacles.

As described above, the processing of the biological samples in the sample receptacles may comprise purification of a target analyte, and binding particles may be exploited to this end. For instance, suitable binding particles comprise or consist of particulate material such as beads including nanobeads, or the like. In some embodiments not recited in the claims, they are analyte binding particles for binding specific biological targets which may, for example, be molecules, cells or viruses. In those embodiments, the particles may have surfaces coated with specific or unspecific binding molecules, such as nucleic acid capture probes, oligo- or poly(dT)-strands for binding mRNA, protein A for binding the Fc parts of immunoglobulins, Fab fragments of antibodies for binding specific proteins, nickel for binding histidine tags, streptavidin or biotin, integrins, adhesins, or other cell-surface molecules, or the like. In some embodiments not recited in the claims, the biological target molecules are cell surface molecules, such that specific cells may be captured by the analyte binding particles. In one embodiment, the difference in size of monodisperse silanized ferrimagnetic iron oxide particles is in average smaller than 5 %. In a specific embodiment, the size or diameter of the particles has a value of n, wherein n is a value from 20 nm to 600 nm. In a more specific embodiment, the size or diameter of the particles has a value of n, wherein n is 100 nm.

Binding particles such as magnetic glass particles are in some embodiments not recited in the claims stored and used as suspensions. Containers with a suspension of binding particles for the isolation of biological material are e.g. agitated on a shaker or mixed with a stirrer. While a stirrer is another potential source of contamination, agitation introduces the problem of losing suspension due to spilling. On the other hand, in automated solutions, placing a cover on the container is connected with the problem that withdrawal of the suspension should be enabled in a manner as easy as possible. For example, removal of the cover prior to every withdrawal would require an additional step in a method for providing a suspension of binding particles, and opening the container also increases the risk of contamination.

An aspect described herein but not part of the presently claimed invention is a system for providing binding particles for the isolation of biological material, the system comprising:
- a container containing a suspension of binding particles for binding the biological material;
- a shaker configured to agitate the container and suspend the binding particles, the shaker comprising a bayonet lock configured to lock the container in an agitation position.

The bayonet lock of the system for providing binding particles as described above provides an advantageous way of engaging the suspension container to its dedicated shaker. Especially in embodiments not recited in the claims where this step is carried out manually, the bayonet lock allows the user to achieve a tight lock between container and shaker without having to apply an undue amount of force. As known in the art, a bayonet lock is based on the principle of rotating a component into a locked configuration.

In a more specific embodiment, the system comprises a plurality of pipets or pipet tips. For example, a multi-channel pipette, contributing to both flexibility and increased throughput.

Therefore another aspect described herein but not part of the presently claimed invention is a system for providing binding particles for the isolation of biological material, the system comprising:
- a linear arrangement of multiple pipets or pipet tips
- a container containing a suspension of binding particles for binding the biological material, the container comprising a cover, said cover having openings and/or being penetrable for the linear arrangement of multiple pipets or pipet tips
- a shaker configured to agitate the container and suspend the binding particles, the shaker comprising a bayonet lock configured to lock the container in an agitation position.

One of the advantages of the suspension container described above is a cover having openings and/or being penetrable for a linear arrangement of multiple pipets or pipet tips. This way, the risk of both spilling and contamination is considerably reduced while the cover need not be removed in order to withdraw the suspension of binding particles. The suspension container can be used for providing suspension until it is empty without the need to open it.

Since the cover has openings and/or is penetrable for a linear arrangement of multiple pipets or pipet tips, it can be advantageously used for parallelization of the provision of a suspension of binding particles. Using multiple pipets enables the user to dispend the suspension of binding particles into multiple vessels at the same time, increasing both efficiency and flexibility in cases where the pipets may be controlled individually.

In the case of the system described above, the corresponding method for providing binding particles for the isolation of biological material comprises the following steps:
a) fastening a container to a shaker comprising a bayonet lock by pressing the container onto the shaker at a predefined horizontal displacement angle, and horizontally rotating the container in the direction opposite to the displacement and thus aligning and locking the container in an agitation position, wherein the container contains a suspension of binding particles for binding the biological material, the container optionally comprising a cover, said cover having openings and/or being penetrable for a linear arrangement of multiple pipets or pipet tips;
b) agitating said container in the agitation position with the shaker and suspending the binding particles.

In some embodiments not recited in the claims, the predefined horizontal displacement angle is 90° or less, in some embodiments not recited in the claims between 1° and 60°, or between 5° and 45°, or about 20°.

The automated analytical system described herein may also have an interface for a user to access the interior of the housing.

Therefore, another aspect described herein but not part of the presently claimed invention is an automated analytical system for processing biological samples, the system comprising:
a) a housing;
b) an interface for observing and manipulating the processing within the housing of the system;
c) a transparent window for opening and closing the interface, wherein the window is slidable between an open or a closed position, respectively, the window comprising counterweights configured to hold the window in the open position, the closed position, or a position therebetween.

While the transparent window conveniently offers the user visibility of the processes inside the analyzer, it may be necessary to open the window so that the user can physically interact with components within the housing. For instance, a component may have to be cleaned, exchanged, or other maintenance measures may have to be carried out. Also, interaction with a sample receptacle, for instance, in a sample rack may be desirable or necessary.

Common approaches in the art include windows that can be swung or slid open, while they are stabilized by conventional hinges, mechanical springs, gas springs, or the like. A window held by gas springs in an open position, for instance, above the analyzer, may be at risk of falling down and potentially onto the head or back of the user while inspecting the interior of the housing. This is especially the case when stabilizing elements such as gas springs approach the end of their life cycle and gradually lose pressure. The counterweights employed by the window described above provide a stable and durable solution minimizing the risk of such accidents.

The automated analytical system disclosed herein may also comprise a storage unit for reagent containers. Such a storage may, for instance, be included in a drawer allowing to retrieve the reagents from the analyzer and supplying fresh ones. In some embodiments not recited in the claims, the storage unit is a cooling compartment, as certain reagents routinely used in clinical diagnostics are prone to deterioration when stored at elevated or even room temperature for extended periods of time. Cooling the reagent storage, however, may give rise to a significant temperature difference between the cooled interior on the one hand and the environmental surroundings on the other hand, especially in cases where the analyzer is located in places of warm or hot climate conditions. Condensation may occur on the outer surface of the cooled compartment, which may lead to problems as described in the following:
In an automated analytical system, it is furthermore advantageous to enable access to the reagent containers and their contents for manipulating modules such as a pipettor as described above. Since pipettors typically operate from above their corresponding vessels simply due to gravity, a window or only a slit may be opened at the top of the cooled storage compartment for the pipettor to enter the storage and aspirate or dispense the reagent in a designated container within the cooling compartment. Drops of condensed water that may have formed at the top surface of the cooling compartment may now drip into the reagent container underneath when an opening is generated. This not only gives rise to the risk of diluting the reagent in the container, but also of introducing contaminants to the reagents. Cross-contamination is a serious problem when encountered especially in clinical diagnostics, as results may be influenced and sample material may be damaged or even rendered useless. For instance, a patient sample tested for a pathogenic nucleic acid sequence may be falsely considered positive due to the presence of cross-contaminating nucleic acids.

In this context, another aspect disclosed herein not part of the presently claimed invention is a system for cooling reagents for conducting biological assays, the system comprising:
a) a cooling compartment surrounded by a substantially thermally insulated housing having a bottom and a top, wherein the top is covered by lid comprising an opening switchable between an open and a closed configuration;
b) a reagent container disposed within the cooling compartment, the reagent container having an openable or penetrable top;
c) a pipettor arranged above the cooling compartment, the pipettor being configured to aspirate reagent from the reagent container through the opening of the lid covering the cooling compartment;
d) a heating element arranged underneath and in thermal contact with the lid covering the cooling compartment, the heating element being configured to heat the lid such that the temperature of the lid's upper surface is above the dew point of the air outside the cooling compartment.

The "heating element", in the context of the present disclosure, may be made from materials like, for example, aluminum and its alloys, copper, steel, silver, alumina ceramics, and/or silicon carbide. In embodiments not recited in the claims where the essentially heating element is made from metal, a further advantage is achieved by facilitating liquid level detection by means of, for example, capacitive liquid level detection methods, as commonly used in automated liquid handling systems.

"Thermal contact" means either direct physical contact or close proximity and/or a contact mediated by a thermally conductive medium, such that an essentially unobstructed heat transfer between heating element and surface is possible. The heating element is in some embodiments not recited in the claims placed in direct physical contact with or close to the surface where external condensation should be avoided.

In some embodiments not recited in the claims of the system disclosed herein, the heating device further comprises a temperature sensor. It may be desirable to monitor the temperature of the heating element and/or the surface of the lid of the cooling compartment and/or the temperature of the reagent container or reagent, respectively. In some instances, ensuring the surface temperature to remain above the dew point of the surrounding external air may benefit from monitoring the temperature, the correctness of which may be surveyed by the temperature sensor. In the case, for example, of deviation beyond a pre-defined threshold, it may be advantageous to adjust the temperature of the heating element specifically to the desired value or range by adjusting the power supplied to the heating element. Such controlled supply may be steered by a control unit or a part thereof. The temperature of the heating element may be controlled by a temperature controller comparing an effective temperature with a target temperature. The controller may, for instance, use a PID (Proportional-Integral-Derivative) algorithm to reduce the deviation between effective and target temperature, as known to the skilled artisan.

Hence, in some embodiments not recited in the claims, external and internal air conditions are monitored by one or more thermal sensors, and a temperature controller controls the power and thus temperature output of the heating element in order to maintain the specified surface above the dew point of the external air.

The heating element can, for instance, be realized by applying an electrical resistive heating element to the inner surface of the lid of the cooling compartment. This may be accomplished by applying a suitably shaped heating material to the surface of the heating element, using, for example, a thermally resistant adhesive. Such a heating element may be made from a carrier material, such as from Polyimide (Kapton^{®}) or silicon-polymer, including an electrically conductive material, generating heat under electrical current. The heating material may include a thermal sensor. The production and application of such adhesive heating material is known to the person of skill in the art.

Alternatively, an electrically conductive, resistive heating material may be printed to the inner surface of the lid of the cooling compartment using so called "thick-film"-technology. In order to avoid an electrical shortcut, the heating element, especially if electrically conductive, is in some embodiments not recited in the claims coated with an electrical isolation layer. Such an electrical isolation layer may be, for instance, made of an oxide such as aluminum oxide. Screen printing may be used to apply the resistive heater material to the heating element. Such printable resistive heating materials typically include an electrically conductive powder, such as silver, copper or carbon and a binder such as a curable epoxy resin. The production and application of such thick-film heaters is also known to the skilled person.

Furthermore, an electrically conductive resistive heating material may be sputtered or vacuum-deposited onto the inner surface of the lid of the cooling compartment using so called "thin-film"-technology. Suitable materials for this purpose include gold or platinum. As in thick-film techniques, an electrical isolation layer may be applied to avoid electrical shortcuts. The shape of the heater may be defined, for instance, by a mask process or by laser ablation. The production and application of such thin film heaters is well-established in the art.

As a further option, electrical resistive wires may be applied to the heating element. Such wires may, for example, be made of constantan. Alternatively, the heating element may have one or more fluid paths to transport thermal transport media.

"Thermal transport media", as understood in the context of the present disclosure, mean fluids of sufficient thermal conductivity to transfer thermal energy throughout the heating material of the heating element. Suitable fluids are known to the person skilled in the art.

In some embodiments not recited in the claims, external and internal air conditions are monitored by one or more thermal sensors, and a control unit controls the power and thus temperature output of the heating element in order to maintain the specified surface above the dew point of the external air.

The pipettor, as described herein, in some embodiments not recited in the claims comprises a pipetting needle such as a washable pipetting needle, or multiple pipetting needles arranged as a multi-channel pipettor, or the like. In some embodiments not recited in the claims, the pipettor comprises disposable pipet tips made of plastics or other suitable material known in the art. The pipettor, like other components such as the switchable opening and/or the heating element, may be controlled by a control unit as disclosed herein. In embodiments not recited in the claims where a temperature controller controls the heating element, that temperature controller may be embodied as an extension or integral part of a higher-level control unit controlling and coordinating multiple of essentially all automated modules and/or processes of the automated analytical system described herein. Also in some embodiments not recited in the claims, the temperature controller may be a separate unit, albeit connected to the control unit via data transfer.

The reagent container may be any suitable container known in the art. In some embodiments not recited in the claims, the reagent container is a flask, a plastic bottle, a canister, or the like. In some embodiments not recited in the claims, the reagent container is opened at the top before introducing it into the cooling compartment. In some embodiments not recited in the claims, the reagent container has a frangible top cover such as a sealing membrane which is penetrated by the pipettor at first use.

As described above, in some embodiments not recited in the claims, the automated analytical system comprises a thermal cycler. As known in the art, the working principle of a thermal cycler is based on specific profiles of alternating heating and cooling steps. In some embodiments not recited in the claims, the thermal cycler is a PCR cycler. The latter "cycles" a sample containing nucleic acids through multiple iterations of denaturation, annealing and elongation catalyzed by a thermostable DNA polymerase, in some embodiments not recited in the claims preceded by a step at a suitable temperature for reverse transcription of a ribonucleic acid (RNA), as may for example be present in viral samples, into deoxyribonucleic acid (DNA). Samples that may have undergone purification in a separation station in some embodiments not recited in the claims of the automated analytical system disclosed herein may be transferred to, for example, a multiwell plate for amplification and detection purposes. In some embodiments not recited in the claims, the biological sample to be processed and the intermediate and end products of the sample are transferred between different modules of the automated analytical system described herein by means of one or more pipettors as described herein.

The thermal cycler, in some embodiments not recited in the claims, comprises a thermal assembly including a mount for holding sample receptacles such as a multiwell plate. In some embodiments not recited in the claims, the mount is a block or plate comprising recesses configured to be engaged by the wells of a multiwell plate.

In this context, an aspect disclosed herein not part of the presently claimed invention is a thermal cycler for incubating biological samples, the thermal cycler comprising:
a) a mount configured to receive and hold a multiwell plate;
b) a loading platform configured to transport the multiwell plate towards and away from the mount, the loading platform being rotatable between a loading position and an incubation position;
c) a motor configured to rotate the loading platform between the loading position and the incubation position.

The thermal cycler described herein advantageously loads a multiwell plate such as a microwell plate via a rotatable platform. In some embodiments not recited in the claims, the loading position has a displacement angle between mount and loading platform of 45° to 135°, or about 90°. In the loading position, the loading platform is accessible to the user or a robotic transfer module such as a gripper. The multiwell plate can in this position be placed on the loading platform which may comprise fastening elements such as clamps, latches or the like. By rotating the loading platform into the incubation position towards the mount, the multiwell plate is ultimately placed onto the mount such as to establish thermal contact between mount and multiwell plate for the cyclic thermal incubation to occur. The motor driving the platform's rotary movement is in some embodiments not recited in the claims a stepper motor. The rotational setup is particularly advantageous when space is limited, since no linear drawer may have to be extended and possibly take up more space. In addition, in some embodiments not recited in the claims the multiwell plate is transferred from a preceding module such as the separation station as described herein in an incorrect orientation for the thermal cycler. For instance, when transferred from the separation station, for example, with a robotic gripper, the multiwell plate may be displaced at an angle, such as about 90°, with respect to the orientation of the mount. Hence, the rotary movement of the drawer my conveniently contribute to placing the multiwell plate into the correct position for thermal cycling.

One or more pipettors of the automated analytical system described herein may in some embodiments not recited in the claims use disposable pipet tips. These may be conveniently supplied through automated movements of robotic elements within the housing of the automated analytical system described herein. For instance, pipet tips may be supplied within a dedicated pipet tip rack that may be introduced into the analyzer through a dedicated interface such as a drawer for consumables by the used. The pipet tip rack may, for instance, be placed on a mount within the housing of the analyzer in order for a pipetting head of a pipettor to pick up pipet tips from a rack. In some embodiments not recited in the claims, multiple pipet tips are engaged by multiple pipets of the pipettor at the same time. For instance, the pipet tips may be arranged in their dedicated rack in a two-dimensional pattern, such as an 8x12 pattern, or the like. The pipettor may be embodied as a multi-channel pipettor such as a linear 8-channel pipettor and may, for instance, pick up 8 pipet tips with a single vertical engaging movement towards and against the pipet tips in their rack. Such a robotic movement may be sensitive to tolerances in the alignment, in particular the horizontal alignment, between pipets and pipet tips. For example, in the case of a horizontal offset between the coordinates of the pipet and their designated tips, the engagement may not be successfully conducted. In severe cases, the pipetting head suspended on a robotic arm may be jammed or the pipets may even be damaged.

Therefore, another aspect disclosed herein not part of the presently claimed invention is a flexibly mounted pipet tip rack, wherein the rack is mounted onto a working surface of an automated analytical system via one or more flexible elements arranged between the rack and the working surface.

Suitable flexible elements are, in some embodiments not recited in the claims, selected from the group of a spring, a rubber or foam plastic layer, an O-ring, or a magnetic field.

With the rack following the movement by tilting towards a biased direction, smaller misalignments between pipets and pipet tips can be compensated.

The automated analytical system escribed herein may further comprise a fluidic network. Such a "fluidic network" is a system for supplying and transporting liquids. In some embodiments not recited in the claims, the fluidic network comprises or consists of a tubing system including pumps, pipettors, reagent interfaces such as inlets or outlets, waste interfaces such as inlets or outlets, and/or valves. The fluidic network is in some embodiments not recited in the claims controlled by a control unit as described herein. For instance, the control unit may control the fluidic network to perform aspiration of reagent through a pipettor from a sample receptacle within a sample rack in a processing position as described herein. It may further coordinate the transfer of sample by pumping and/or pipetting throughout the fluidic network from and to distinct modules of the automated analytical system described herein. For instance, the sample aspirated from the primary sample receptacles present in the sample rack may be pipetted into secondary receptacles and be subjected to a purification process in a separation station. From there, the liquid containing the enriched or isolated analyte is transferred, for example, also by pipetting, to a tertiary sample receptacle and subjected to an amplification and detection process in a thermal cycler as described herein. The tubing connecting, for example, pipettors with reagent containers or the like may be gated by a valve system which may in turn by controlled by the control unit. It may be advantageous to ascertain that the valves of such a valve system are operational. For example, the electrical connection of a valve to its power supply may be interrupted. In some cases, this may occur by inadvertent removal of an electrical plug powering an individual valve.

In this context, in yet another aspect described herein not part of the presently claimed invention the present disclosure describes a method for monitoring a valve system in an automated analytical system, the method comprising the following steps:
a) initiating the automated analytical system by switching on a power supply;
b) performing, during or directly following the initiation process, an initiation valve check of the operational status of a valve, wherein the check comprises sending an electrical probing signal to the valve from a control unit and detecting the presence or absence of an electrical response signal by the control unit, wherein the presence of the response signal indicates that the valve is operational;
c) operating the valve system in a fully initiated mode of the automated analytical system, and repeatedly performing the check of step b) as an operation valve check on a valve in an idle state;
d) creating, in the case of detection of the absence of an electrical response signal in step b) or step c), an error message.

The combination of an initial check of the operational status upon powering up the analyzer on the one hand and a continuous check during the regular operation of the analyzer provides a means for closely monitoring and ensuring the functionality of the valves of a valve system.

In some embodiments not recited in the claims, the electric probing signal is a voltage applied to a circuit associated with an individual valve. The circuit is in some embodiments not recited in the claims a printed circuit board (PCB).

A "printed circuit board" or "PCB" is a laminated sandwich structure of conductive and insulating layers. PCBs have two complementary functions. The first is to affix electronic components in designated locations on the outer layers by means of soldering. The second is to provide reliable electrical connections (and also reliable open circuits) between the component's terminals in a controlled manner often referred to as PCB design. Each of the conductive layers is designed with an artwork pattern of conductors (similar to wires on a flat surface) that provides electrical connections on that conductive layer.

When the control unit applies a voltage to the circuit associated with an individual valve, a measurable current is induced on that circuit provided the circuit is operational, i.e., connected to the power source controlled by the control unit and/or the control unit itself in cases where it also acts as a power source. The voltage is in some embodiments not recited in the claims applied to the same circuit that is responsible for switching, i.e., opening or closing the valve. In such embodiments, the voltage applied for performing the check is below a threshold value necessary for switching the valve. In essence, the process performed during the check mimics the switching of the valve, albeit at a lower voltage so as to not effectuate opening or closing.

An "idle state" of a valve, as used herein, means a state in which the valve is not currently being switched between its open and its closed configuration. In some embodiments not recited in the claims, the control unit flags a valve as "idle" when it has not been switched for a specific amount of time which may be form 1 s to 10 s, or from 2 s to 5 s, or about 3 s. Consequently, the method described above provides means for continuous surveillance of the valve system without interfering with the switching of a valve which is hence currently not in an idle, but in an active state.

However, in some embodiments not recited in the claims, a valve to be switched is also included in the operation valve check. In some embodiments not recited in the claims, the method further comprises in step c) performing the check of step b) on a valve in an active state. The "active" state means that the respective valve is being or is about to be switched. In some embodiments not recited in the claims, "active" means the state in which a valve is a specific amount of time away from switching, such as 10 s, 5 s, 2 s, 1 s, 500 ms, or 100 ms before switching.

In the operation of the automated analytical system described herein, different valves of the valve system may have a different impact on any results generated by the analyzer. The impact may depend on factors such as location of a valve, the analyzer modules between which it operates, or the like. For example, any steps within the automated analytical system that may directly or indirectly influence the liquid biological sample to be analyzed may have a greater impact on the result to be generated than, for instance, steps in connection with the disposal of liquid waste.

In this context, in some embodiments not recited in the claims of the method described above, step d) further comprises aborting the operation of the automated analytical system in the case of the absence of an electrical response signal from at least a subset of valves of the valve system. In some of these embodiments, the subset consists of any valves upstream of sample interaction elements of the fluidic network. "Sample interaction elements" are those parts of the fluidic network that contain the biological sample at any point in time or supply any type of liquid to the biological sample at any stage, for example, a pipettor aspirating the biological sample from a sample receptacle, or a tube designated for supplying reagent to the amplification and detection module, or the like. In the case of failure of such upstream valves, the sample may be compromised, or at least the processing of the sample within the automated analytical system. For instance, a valve failing to open may prevent a reagent to be added to the sample, such that an analytical biochemical reaction may not successfully be performed. As such errors may lead to consequences such as false-positive diagnostic results and ultimately wrong patient treatment or the complete absence thereof, the operation of the automated system, for instance, a "run" in which a specific set of samples is being processed and analyzed, is stopped in the above-described embodiments not recited in the claims such that the respective valves can be fixed before resuming the operation.

On the other hand, in such embodiments, there may be a subset of valves of the valve system downstream of sample interaction elements of the fluidic network. These latter ones do not have an impact on the biological sample and thus require less severe intervention or no intervention at all aside from creating the error message. Such downstream valves comprise, as described above, any valves of the fluidic network designated for liquid waste disposal, or the like.

### Exemplary embodiments

The following Examples are meant to illustrate specific embodiments of the systems and methods of the present disclosure, while they are not limiting.

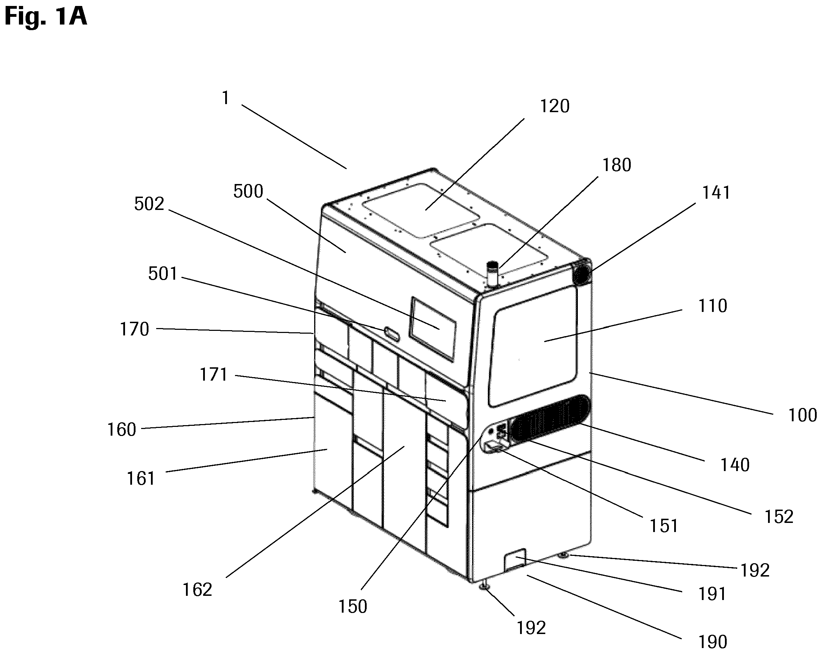

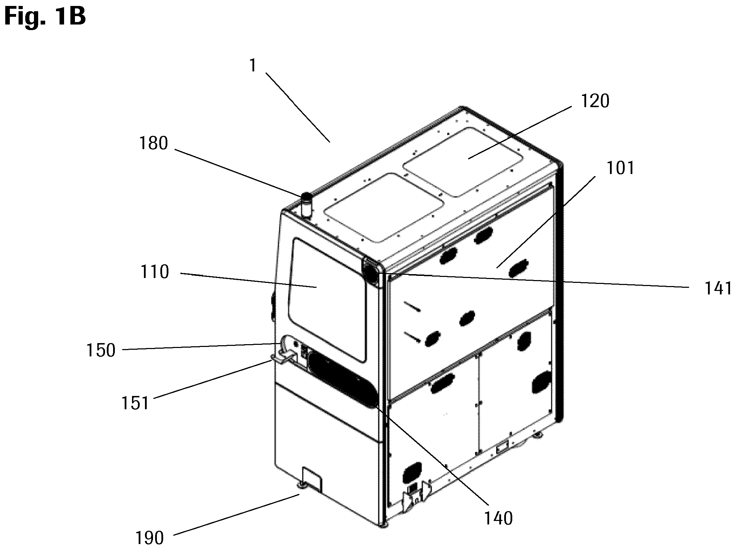

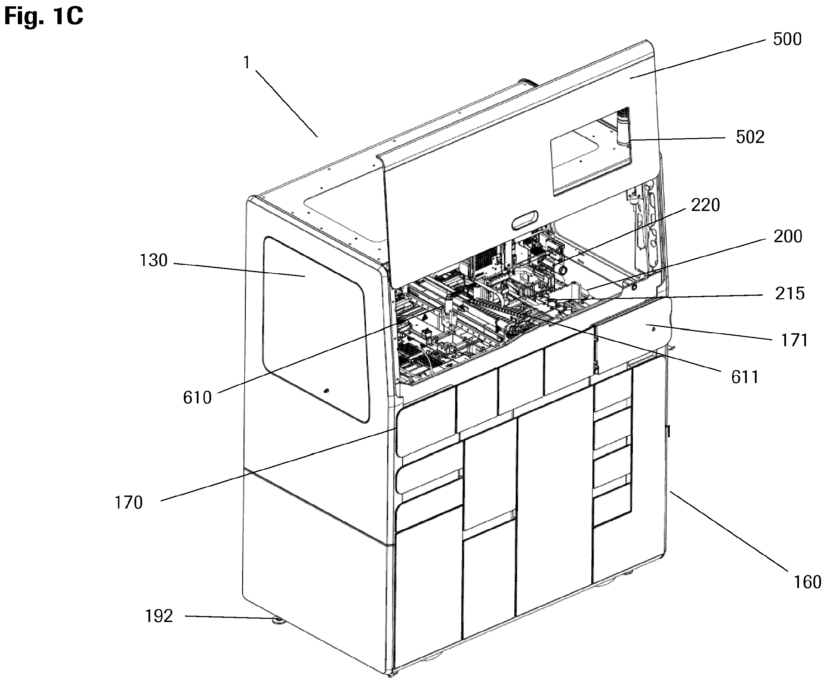

The schematic drawings of Fig. 1 depict an embodiment of the automated analytical system (1) described herein.

The perspective view of Fig. 1A displays the analyzer (1) in a perspective front view from slightly above. The instrument is surrounded by a housing (100) protecting the interior from external influences and vice versa. For example, the interior is protected from external sources of contamination, while a user outside of the housing (100) is shielded from biological agents such as pathogens that may be processed on the inside.

The interior, however, is observable through a transparent window (500). In this embodiment, the window (500) comprises a handle (501) that may be a recess or a hole. In other embodiments not recited in the claims, the handle (501) may be embodied as a protrusion like a knob or the like. Integrated within the transparent window (500) is a display (502) that may, for example, be embodied as a touch screen. The display (502) serves as an interface for the user who may thereby be informed about, for example, the status of specific samples within the analyzer (1), the temperature within the housing (100) or even of specific modules, the filling status of reagent containers or waste containers, the remaining number of consumable components, estimated remaining duration of an experiment, or the like. In some embodiments not recited in the claims, the display (502) is an interactive device. In this context, the display may comprise a keyboard, a microphone including a voice processor, a touch screen, or other suitable entering device. By entering commands via the display (502), the user may influence the actions performed by and within the analyzer (1). For instance, the user may order a control unit to prioritize a specific sample among other samples present within the automated analytical system (1) at a given point in time. In other cases, the user may schedule specific processing steps, or adjust certain parameters of the system (1) such as temperature or the like. In some embodiments not recited in the claims, the display (502) is connected to a control unit as described herein, through which the user may manipulate the above-mentioned processes and parameters.

In order to improve visibility of the modules and processes within the housing (100), the analyzer (1) in the depicted embodiment has additional transparent windows on top (120) and on the side (110) of the instrument.

Ventilation openings (140, 141) contribute to maintaining a preferred temperature within the housing (100) for the sake of stability of samples and reagents as well as ensuring that incubation steps in modules such as a separation station can be performed at a specified required temperature.

The depicted automated analytical system (1) further comprises a connectivity interface (150) including a holder (151) for accessories such as a handheld barcode reader, and communication ports (152) such as USB ports or other suitable ports for data transfer.

Further visible is a lower loading front (160) with a plurality of dedicated drawers such as a reagent drawer (161) and a waste drawer (162) designated for mainly larger components such as bulk reagent containers, waste canisters or the like. The upper loading front (170) of the depicted embodiment comprises several flaps or drawers such as a sample receiving bay cover flap (171). As can be gathered by inspecting the drawing, the upper loading front (170) is designated for the entry or retrieval of less voluminous components than in the case of the lower loading front (160).

Further visible in Fig. 1A is a signal lamp (180) mounted to the top of the instrument (1). Such a lamp may indicate alerts by, for example, flashes of light in different coded colors. The location on top of the automated analytical system (1) improves its visibility from essentially all sides, as opposed to a location at the front or back of the system (1).

At the bottom of the automated analytical system (1) of the depicted embodiment is a levelling mechanism (190) comprising level indicators (191) based on, for example, a gravimetric sensor such as inclinometer including a display or other type of indicator such as signal lights like LEDs, and adjustable pedestals (192) for levelling the instrument (1). Maintaining an analyzer in a position parallel to the floor and thus aligned with gravity is in many cases important in order to avoid, for example, spilling of liquids inside the housing (100) due to tilted sample receptacles or open reagent containers.

Turning to the perspective back view of the automated analytical system (1) shown in **Fig. 1B****,** various elements of seen in Fig. 1A are also visible here. In addition, the back wall (101) of the analyzer (1) can be seen in this picture.

For the sake of depicting an embodiment of the upper interior space of the automated analytical system (1), the perspective front view of **Fig. 1C** displays the automated analytical system (1) with an opened front window (500). The window (500) is transparent and will thus be opened mainly for manipulation of interior components, as visual inspection may also be performed with the window (500) in a closed configuration. It can be gathered that the window (500) is slidable vertically along guide rails (510, not visible in this drawing), wherein the lower position is a closed configuration, while the upper position is an open configuration. The display (502) has been left out in this depiction, its position is visible as a corresponding cut-out in the window (500). A side window (130) corresponding to the opposing side window (110) as seen in Figs. 1A and 1B contributes to enabling visual monitoring of the interior processes from the outside.

Within the housing (100), various devices and modules can be seen. For instance, on the right-hand side, the sample receiving bay (200) is visible from above, wherein its dedicated interface is covered by the sample receiving bay cover flap (171). Within the sample receiving bay (200), a reader (220) such as a camera or a barcode reader is depicted. The sample receiving bay (200) is displayed with a sample rack (210, not visible in this drawing) holding a plurality of sample receptacles (215), in this embodiment, sample tubes.

A pipettor (630, not visible in this drawing) is located essentially above a reagent storage unit (610, not visible in this drawing) located behind the reagent drawer (161) and may in this embodiment therefore be termed reagent pipettor (630). Also visible is a driving belt (611) belonging to the driving mechanism for moving the reagent pipettor (630).

Some of the components within the housing (100) schematically visible in the current figure will be explained in the following.

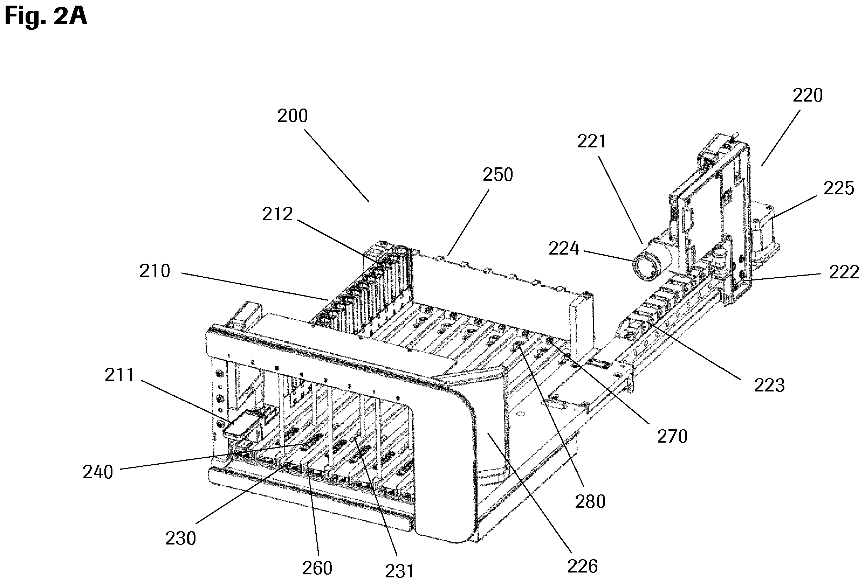

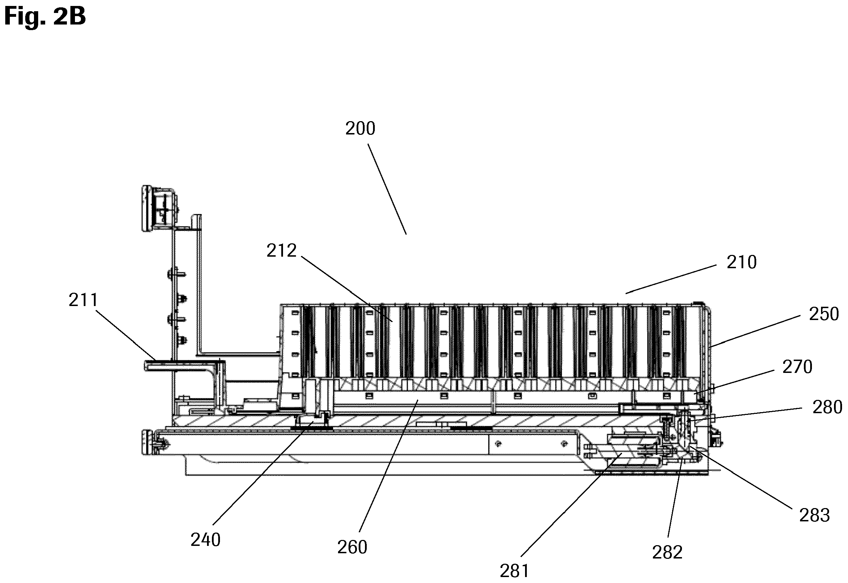

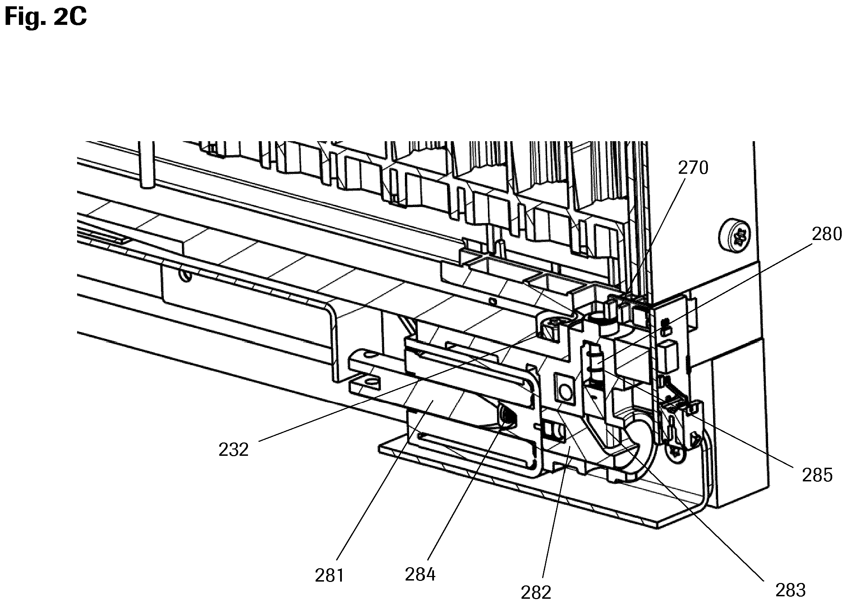

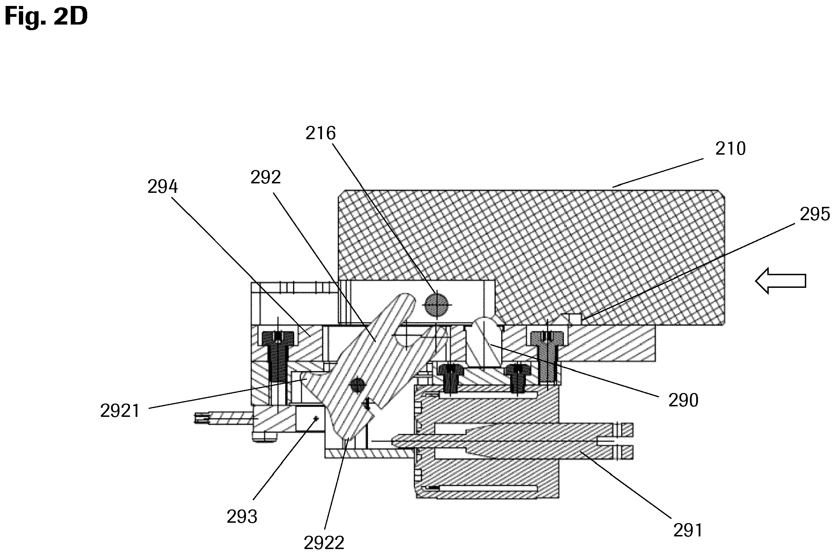

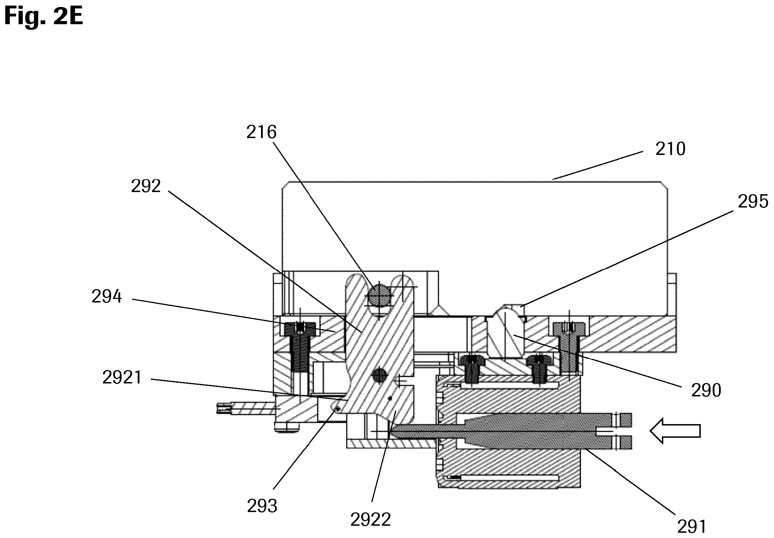

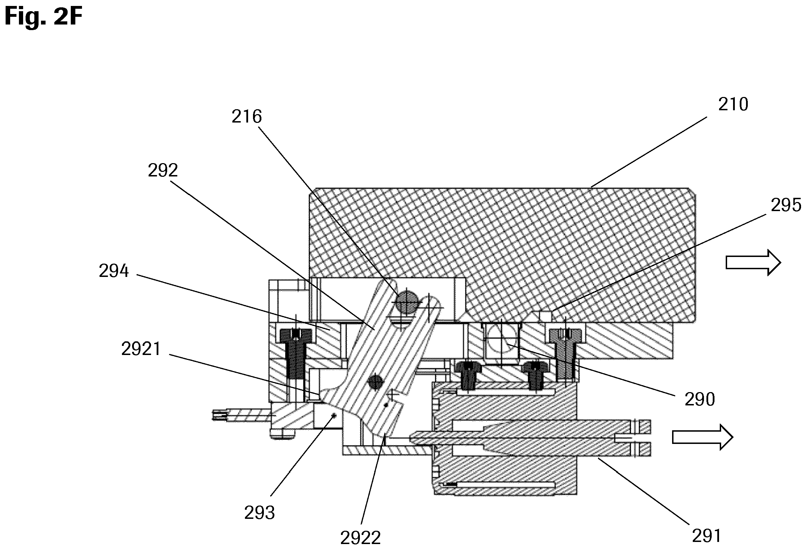

The individual drawings of **Fig. 2** depict various aspects of the sample receiving bay (200) as disclosed herein.

**Fig. 2A** can be essentially seen as an augmented and separate perspective front view of the sample receiving bay (200) visible on the right-hand side of Fig. 1C. The bay (200) of this embodiment has eight lanes (230) arranged substantially parallel to ach other configured to receive and guide sample racks (210) holding a plurality of sample receptacles (215, not shown) within dedicated sample receptacle slots (212). The current drawing shows only one of the lanes (230), the leftmost one, loaded with a sample rack (210). The sample rack (210) shown here comprises a handle (211) for convenient manual insertion and retrieval by the user. Each lane (230) comprises a protruding guide piece (231) contributing to centering the sample rack (210) during its insertion or retrieval movement. It thereby acts as a short guide rail. Another part of each of the depicted lanes (230) is a proximal stopping element (240) as described herein, in the present embodiment represented by an injection-molded part, namely an injection-molded baffle. The proximal stopping element (240) is configured to create friction between itself and a corresponding protrusion (not shown) at the bottom of the sample rack (210), thereby prompting the user to pause a manual insertion movement and indicating that the focusing position has been reached. In the latter position, the reader (220) will be focused on the lane (230) holding the sample rack (210) such as to read out features of the sample rack (210) or the sample receptacles (215) held therein. The reader (220) depicted in this drawing is embodied as a multi-component unit. It comprises a receiver (221) collecting electromagnetic waves such as light beams in the case of a camera or a one- or two-dimensional barcode reader. The reader (220) in this embodiment further comprises a mount (222) movably attached to a guide rail (223). Powered by a motor (225) such as a stepper motor, the reader (220) is movable along the guide rail (223) in order to adjust the reader's focus onto the sample rack (210) in lane 1. Other embodiments are conceivable, in which the reader (220) is stationary, for example, in the case of an autofocus camera. The reader (220) in this embodiment has an integrated light source (224) embodied as an LED ring arranged around the edge of the receiver (221). This light source (224) is thus axially aligned with the optical path of the receiver (221) of the reader (220). It can be gathered that, in the depicted embodiment, the optical path between the reader (220) and the sample rack (210) with its receptacles (215, not shown) is not a straight line. The sample receptacle slots (212) of the sample rack (210) have openings facing the sides of the rack (210), such that, for example, an identifier such as a barcode on a sample receptacle (215) may be accessible to the reader (220). In the embodiment shown in Fig. 2A, a light beam following the optical path is bent at an angle of about 90° by a mirror (226) placed within the optical path of the reader (220) with its light source (224) and its receiver (221). This constellation saves space which is often limited in laboratories, since the reader (220) can be moved along the same axis as the sample racks (210) on their lanes (230) and need not extend the width of the automated analytical system (1) as can be gathered from the depiction in Fig. 1C.

The distal stopping element (250) of the sample receiving bay (200) of the embodiment depicted in Fig. 2A comprises or consists of a part or all of the posterior wall of the sample receiving bay (200). The user inserting a sample rack (210) into the receiving bay (200) along a dedicated lane (230) will stop the insertion movement upon meeting the resistance of this distal stopping element (250), thereby having reached the processing position.

Positioning in this embodiment is conferred by a guide rail (260) as a positioning element (260) forming part of the lane (230). A skirt protruding from the bottom of the sample rack (210) towards the sides of the rack (210) is guided within the bracket of the guide rail (260).

Further contributing to the positioning of the sample rack (210) in the processing position is the detecting element (270) embodied, in the present depiction, as a forked light barrier (270) at the distal end of the lane (230) fixed to the posterior wall (250) of the sample receiving bay (200) and thus the distal stopping element (250). In its additional role as a positioning element, the forked light barrier (270) acts as a mechanical bracket for a protrusion (not shown in this figure) protruding from the distal end of the sample rack (210). This protrusion also interrupts the light barrier (270) in its role as a detecting element.

Upon detection of the sample rack (210) in the processing position via said light barrier (270), a mechanism is triggered leading to the upwards extension of a vertically arranged locking bolt (280) acting as a locking element through a hole in the sample rack (210). The locking element (280), with the assistance of the positioning (260) and detecting (270) elements, thereby locks the sample rack (210) in an aligned processing position with regard to all six degrees of freedom.

**Fig. 2B** displays a horizontal cross-section of the sample receiving bay (200) along a lane (230) with a sample rack (210) inserted into the processing position.

Some of the elements introduced in Fig. 2A are also visible in the present cross-sectional view, for example, the rack handle (211), the receptacle slots (212), the back wall (250) of the sample receiving bay (200) acting as distal stopping element, and the guide rail (260) acting as a positioning element. The current view provides a more detailed display of the proximal stopping element (240) embodied as an injection-molded baffle.

Further shown is the locking mechanism for arresting the sample rack (210) in the processing position. A horizontally arranged solenoid lock (281), upon detection of the sample rack (210) in the processing position with the forked light barrier (270) acting as a detecting element, is activated, in some embodiments not recited in the claims, by a control unit, and extends into an extended position. A horizontal wedge (282) is thereby pushed against and slid along a vertical wedge (283) forming part of the vertical locking bolt (280), which is the locking element immediately interacting with a corresponding hole in the sample rack (210) by being pushed upwards into said hole and locking the sample rack (210) in the processing position.

A more detailed view of this locking mechanism is provided in **Fig. 2C****,** in which the sample rack (210) is not present in order to create a clearer view of the locking elements. Reset forces are conferred to the solenoid lock (281) by a horizontal spring (284) as well as the locking bolt (280) by a vertical spring (285). A screw (232) is further visible fastening the locking mechanism to the bottom of the lane (230).

An alternative embodiment with regard to the locking mechanism is depicted in the schematic cross-sectional views of **Fig. 2D-F,** showing different stages of the insertion and retrieval of a sample rack (210).

In **Fig. 2D****,** a sample rack is moving from right to left towards the distal stopping element (294) and therefore the processing position (movements of designated elements are indicated by arrows). A spring catch (290) arranged underneath the lane (230) and protruding upwards therefrom is pressed down into the space underneath the lane (230) by the moving rack (210). A knob (216) protruding sideways from the rack (210) engages a rotary latch (292) and turns it in counterclockwise direction. In this stage, a solenoid lock (291) is in a retracted and thus open configuration. A light barrier (293) extending towards the reader and thus orthogonally to the lane (230) is unobstructed and therefore in a non-detecting configuration.

**Fig. 2E** now displays the constellation with a fully inserted sample rack (210) locked in the processing position. The knob (216) of the sample rack (210) has engaged the rotary latch (292) and pushed it into an essentially fully vertical position in which it is pressed against the distal stopping element (294). In this position, the spring catch (290) engages a corresponding recess (295) of the sample rack and locks it in place. The rotary latch (292), at the same time, interrupts the light barrier (293) with a dedicated tongue (2921) and thereby effectuates detection of the sample rack (210) in the processing position. The rotary latch (292) itself is locked into place by the now extended solenoid lock (291) in a closed configuration, arresting a ridge (2922) of the rotary latch (291). In this embodiment, positioning, detecting and locking are synergistically conferred by multiple cooperating elements. The rotary latch (292) has a role in positioning (by engaging the knob (216) of the sample rack (210)), detecting (by interrupting the light barrier (293) with its tongue (2921)) and locking (by being blocked by the solenoid lock (291) via the ridge (2922)).

Retrieval of the sample rack (210) in this embodiment is displayed in **Fig. 2F****.** Initiated by retracting the solenoid (291) back into its open configuration, the sample (210) can be pulled out from left to right (see arrow) and rotate the rotary latch (292) back into a diagonal position, while the knob (216) disengages, the tongue (2921) moves away from the path of the light barrier (293) such that detection is terminated, and the spring catch (290) disengages and is pressed down by the moving sample rack (210).

The basic principle of the process depicted in Figs. 2D-F applies to other conceivable embodiments not recited in the claims including the embodiment shown in Fig. 2C with a wedge mechanism for locking the sample rack (210) in the locking position.

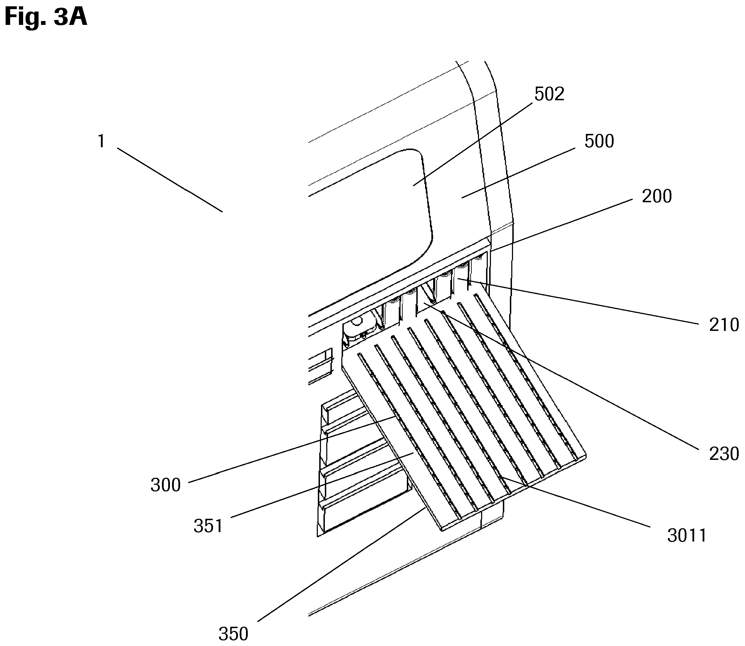

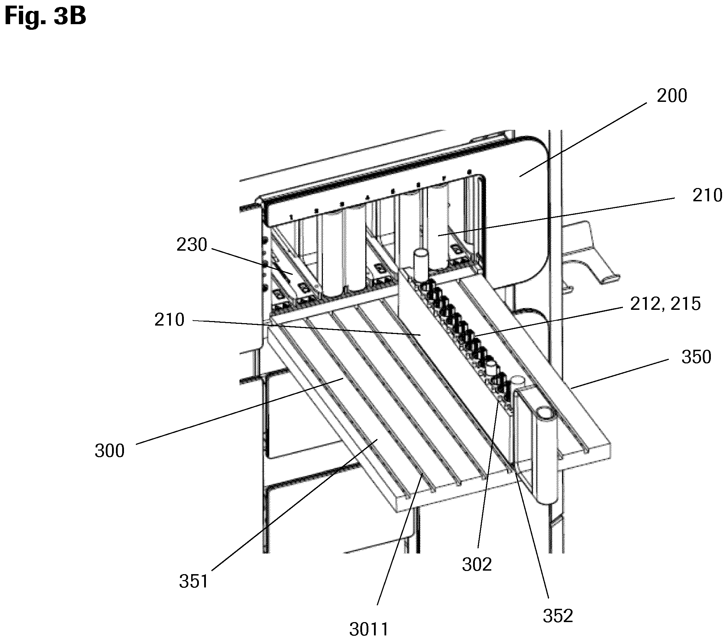

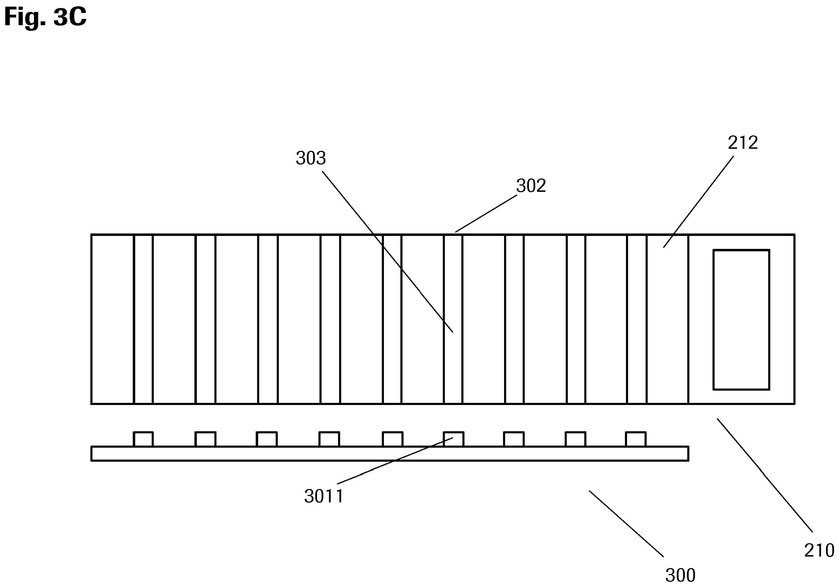

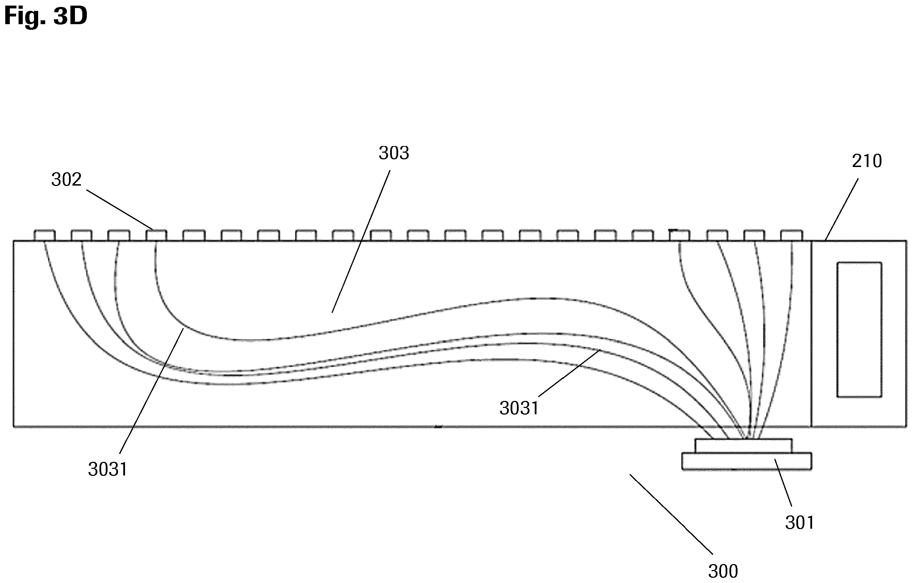

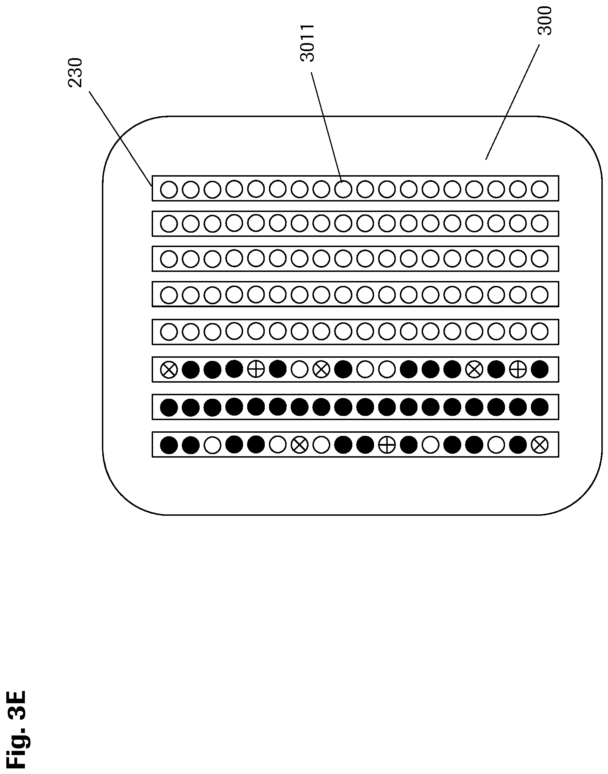

Aspects of the indicator system (300) of the automated analytical system (1) are depicted in the drawings of **Fig. 3****.**

In this context, **Fig. 3A** provides a perspective overview of a sample receiving bay (200) according to an embodiment of the automated analytical system (1) disclosed herein.

The sample receiving bay (200) is depicted in an open configuration, with its interior accessible to a user standing in front of the automated analytical system (1).

In this embodiment, the sample receiving bay (200) comprises a moveable platform (350). An indicator system (300) is integrated into the moveable platform (350), the indicator system (300) interfacing with the upper surface - the working surface (351) - of the platform (350). Above the sample receiving bay (200), a display (502) integrated into the transparent window (500) can be seen.

The moveable platform (350) is configured to be retracted horizontally out of the housing (100) so as to form an extension of the plurality of lanes (230) outside of the housing (100), the platform (350) having positioning elements (352, not shown in this figure) configured to position a sample rack (210) in an exposed inspection position. Fig. 3A shows the moveable platform (350) in a fully extended configuration, onto which sample racks (210) may be pulled out and placed for improved visual inspection or direct physical manipulation by the user.

The indicator system (300) of the depicted embodiment comprises a plurality of individual light sources (3011) such as LEDs, arranged in alignment with the receptacle slots (212) of a sample rack (210) configured to hold a plurality of sample receptacles (215).

The interaction between the indicator system (300) and a sample rack (210) is displayed in **Fig. 3B****.** The moveable platform (350), like in Fig. 3A, is shown in its fully extended position, but in the present depiction with a sample rack (210) in an exposed inspection position on the working surface (351) of the platform (350). The sample rack (210) is positioned in the inspection position with the help of a positioning element (352), in this embodiment, located at the proximal end of the working surface (351) of the moveable platform (350). The positioning element (352) can be, for example, a hook, a latch, a pin, a skirt, or any other conceivable mechanical solution. In some embodiments not recited in the claims, the positioning element (352) comprises or consists of a magnet.

A schematic view of an embodiment of the optical coupling between light source (3011) and light emission window (302) can be seen in the cross-sectional depiction of **Fig. 3C****.** In principle, the same arrangement is visible as in Fig. 3B. The sample rack (210) is in the exposed inspection position, wherein the indicator system (300) arranged along the extended lanes (230) on the working surface (351) of the moveable platform (350) is in alignment with the dedicated sample receptacle positions (212) of the sample rack (210). More precisely, in the depicted embodiment, the individual light sources (3011) of the indicator system (300) are aligned with the sample receptacle slots (212) of the sample rack (210) in the exposed inspection position, such that underneath each of the light emission windows (302) in close proximity to each sample receptacle slot (212), an individual light source (3011) is arranged and optically coupled thereto. In the presently depicted embodiment, the optical light guiding system (303) optically coupling light source (3011) and light emission window (302) may be a vertically aligned light guiding rod, fiber, or simply a tunnel extending vertically through the sample rack (210).

In the alternative embodiment of an optical light guiding system (303) shown in **Fig. 3D****,** a single light source (301) is arranged underneath the sample rack (210) in the inspection position on or within the working surface (351) of the moveable platform (350). The optical light guiding system (303) of this embodiment comprises a plurality of optical fibers (3031), each of which coupling the light source (301) to a corresponding light emission window (302) associated with a dedicated sample receptacle slot (212).

**Fig. 3E** shows the individual light sources (3011) of the indicator system (300) according to the embodiment of Figs. 3A-C in a two-dimensional depiction viewed from above. The individual light sources (3011) of this embodiment have different colors and are configured to be optically coupled with their corresponding light emission windows (302). The sample rack (210) is omitted from the present drawing in order to focus on the information display principle of the indicator system (300). Each of the individual light sources (3011) aligns, in the inspection position or exposed inspection position, with a sample receptacle slot (212) of a corresponding sample rack (210), wherein a specific color of the light source (3011) indicates a specific status of a corresponding sample receptacle (215) and its biological sample within the respective sample receptacle slot (212). For example, red color (represented by an x-filled circle) may indicate a sample receptacle slot (212) holding a sample receptacle (215) with a clotted biological sample requiring manual intervention by the user. Green light (represented by a solid black circle) might indicate an unproblematic sample, while blue color (represented by an empty circle) may indicate an empty receptacle slot (212). Orange color (represented by a +-filled circle) may indicate an incorrectly capped sample receptacle, or the like. With the help of these readily decodable visual signals, the user may easily spot problematic samples as well as the type of the underlying problem based on the color code of the indicator system (300).

As described herein, the indicator system (300) disclosed herein may also be arranged along the lanes (230) within the housing (100) in the sample receiving bay (200) of the automated analytical system (1). While the moveable platform (350) provides improved accessibility of the samples, the embodiments with an indicator system (300) within the housing (100) may ease the burden on the user by abolishing the need to retrieve the sample rack (210) from the housing (100).

Once the biological sample has been introduced into the analyzer (1) with the sample rack (210) in the processing position, dedicated modules may start performing processing steps on the sample. As described above, one typical step preceding analysis of a biological sample is an isolation or purification process.

In some embodiments not recited in the claims of the automated analytical system (1) disclosed herein, a separation station performs an analyte isolation process using dedicated binding particles for binding a biological target material. Since binding particles, for example, magnetic glass particles for binding nucleic acids are often provided as a suspension in a dedicated container, it may be important to maintain a homogeneous distribution of the binding particles throughout the suspension. Particles sinking to the bottom of a resting container typically change the distribution, leading to a lower density of particles in the upper region of the container, while their density at the bottom increases. Aspiration of aliquots of the suspension may thus retrieve varying amounts of binding particles at different aspiration events despite a consistency in volume of aspirated suspension throughout the events. Especially in clinical diagnostics, such variances may affect the nucleic acid yield and may jeopardize a successful downstream analysis of a biological sample.

An advantageous approach for maintaining homogeneity of such a suspension includes agitating the container with the help of a robotic shaker. For example, between two pipetting events, the shaker may agitate the container and thereby the suspension within for a specified amount of time.

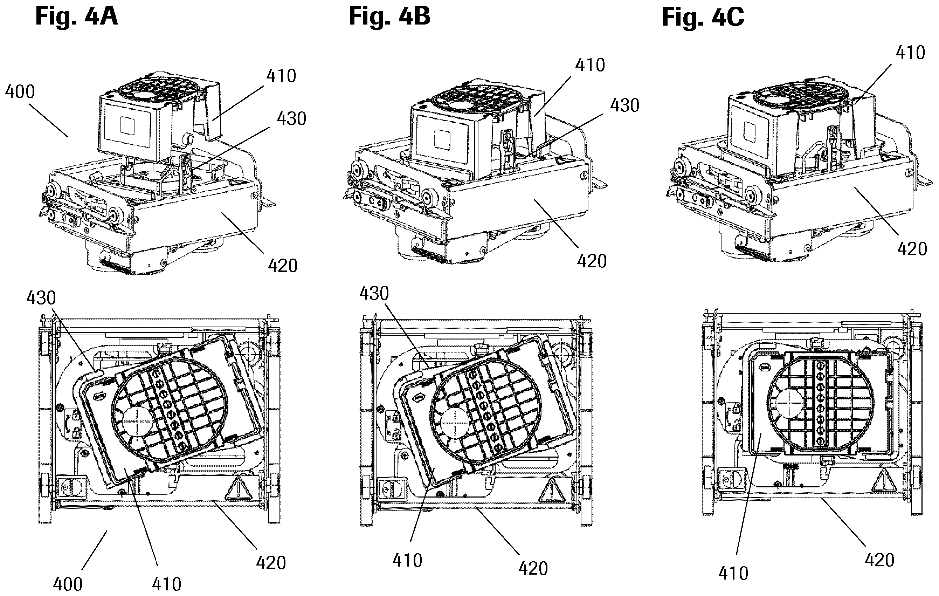

The drawings of **Fig. 4** show different stages of an advantageous process for fastening a container (410) containing a suspension of binding particles to a shaker (420) in a dedicated system (400) for providing binding particles for the isolation of biological material. Each of the individual Figures 4A-C consists of an upper drawing representing a perspective view and a lower drawing showing the same constellation as the upper drawing in a plane view from above the suspension container (410).

**Fig. 4A** shows an open configuration with the suspension container (410) being displaced at a displacement angle, in this depiction about 20° with respect to the - closed - agitation position. The container (410) is located above the shaker (420).

In **Fig. 4B****,** the container (410) is placed on the shaker (420) and pressed against it from above, still at the same displacement angle as in Fig. 4A.

The agitation position, in which the container (410) containing a suspension of binding particles is fastened to the shaker (420) is displayed in **Fig. 4C****.** As compared to the previous constellation from Fig. 4B, the suspension container (410) has now been rotated 20° in clockwise direction, thereby fastening the container (410) to the shaker (420) via the bayonet lock (430).

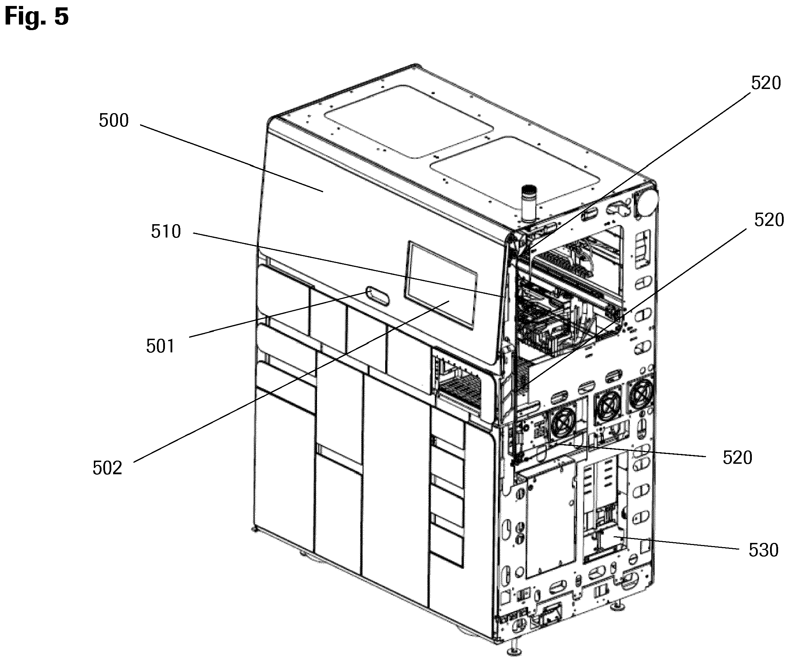

Turning to another aspect of the automated analytical system (1) described herein, **Fig. 5** displays a transparent window (500) of the analyzer (1).

As described herein, in some embodiments not recited in the claims the user is enabled to reach into the interior space of the housing (100) by way of an interface openable and closable by a transparent window (500). The transparent window (500) for opening and closing the interface is slidable between an open and a closed position, respectively, the window (500) comprising counterweights (530) configured to hold the window (500) in the open position, the closed position, or a position therebetween.

The transparent window (500) in this embodiment is slidable along a guide rail (510) and connected to the counterweights (530) via a pulley (520).

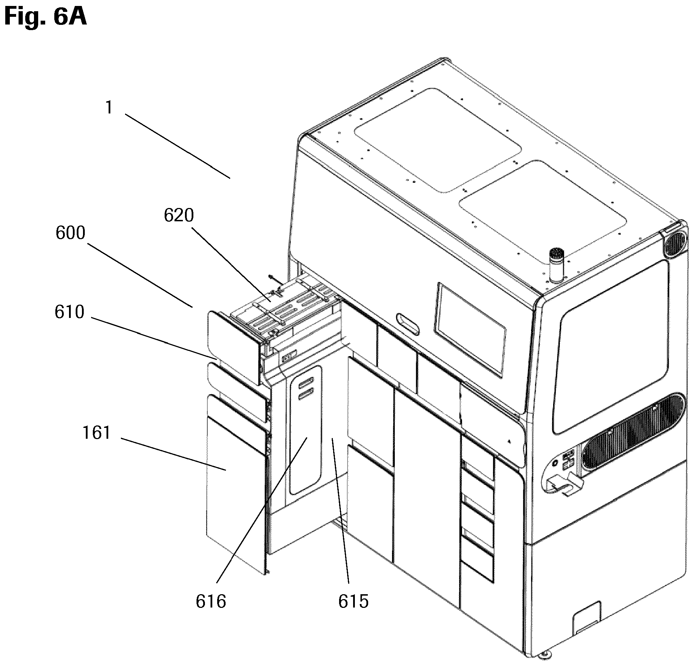

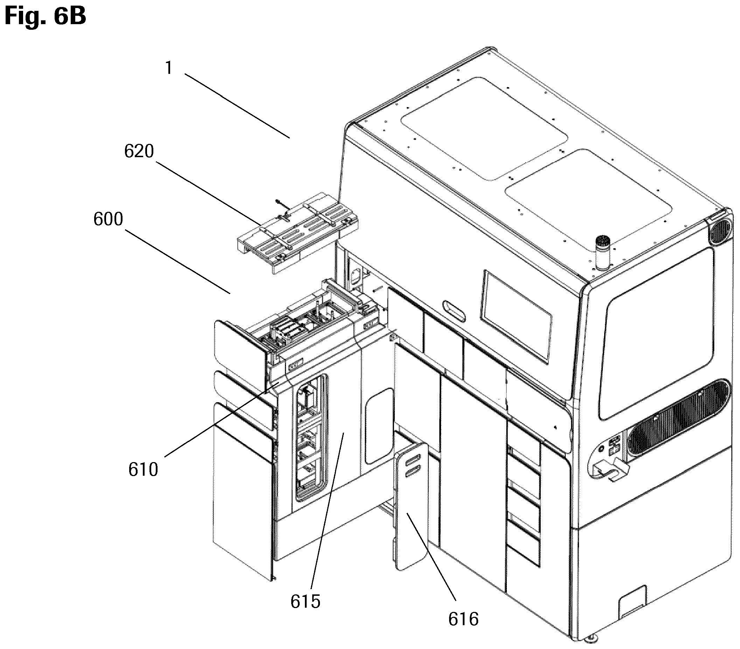

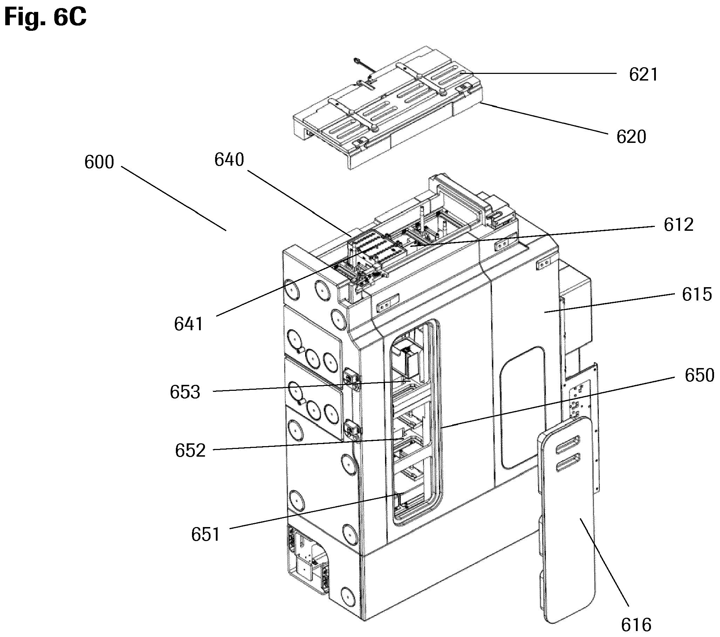

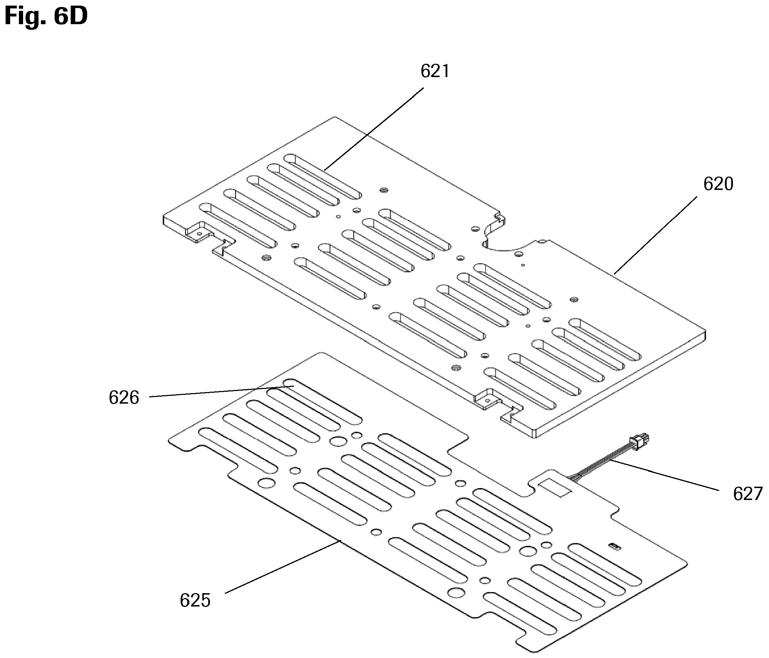

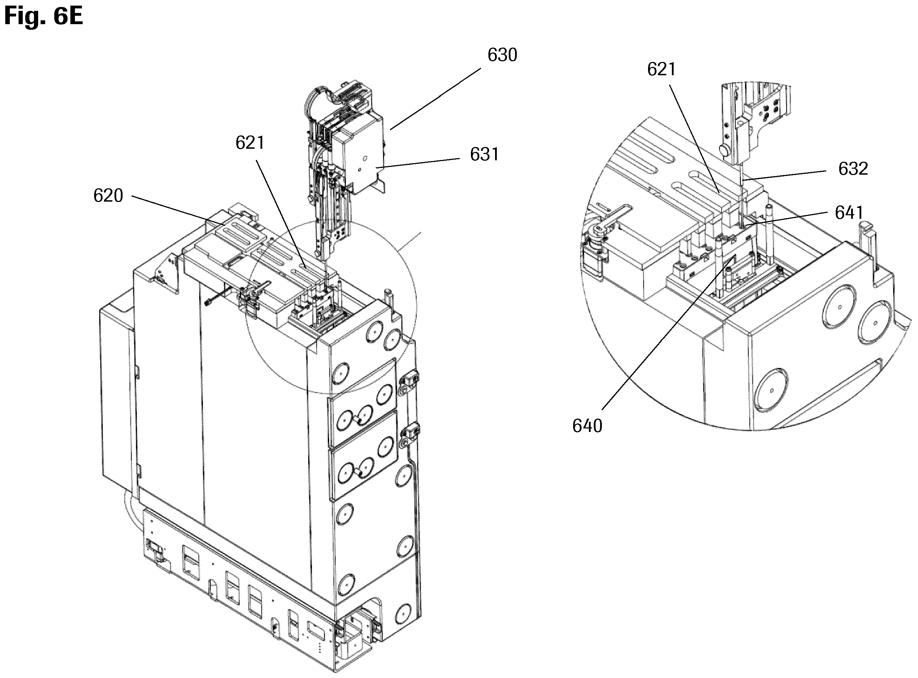

The drawings of **Fig. 6** relate to the above-described system (600) for cooling reagents for conducting biological assays in the automated analytical system (1) described herein.

**Fig. 6A** shows a perspective view of the automated analytical system (1) described herein according to essentially the same embodiment as shown in Fig. 1. The reagent drawer (161) is open in this depiction such as to reveal parts of the cooling system (600) comprising a cooling compartment (610) surrounded by a substantially thermally insulated housing (615) having a bottom and a top, wherein the top is covered by lid (620) comprising an opening (621) switchable between an open and a closed configuration. The pipettor (630) belonging to the cooling system (600) is inside the housing (100) of the analyzer (1) and therefore not visible in the present drawing.

In **Fig. 6B****,** the lid (620) is shown separate from the cooling compartment (610) it normally covers, in a partially exploded view. Also, a side door (616) is visible removed from the housing (615) in which it is integrated in a closed configuration. The side door (616) may be useful for exchanging or inspecting reagent containers or other components inside the substantially thermally insulated housing (615).

**Fig. 6C** shows a more detailed view of the cooling compartment (610) separate from the automated analytical system (1), also in a partially exploded view as before. Underneath the removed lid (620) there is a reagent container (640) disposed within the cooling compartment (610) on a pipetting deck (612), the reagent container (640) having multiple top openings (641) for the introduction of needles or tips of a pipettor (630, not shown). Behind the removed side door (616) a reagent storage compartment (650) can be seen, in this embodiment comprising three distinct levels (651, 652, 653) throughout which a control unit may rearrange distinct reagent containers based on which ones of them are needed in a given situation. For example, a reagent container necessary for an impending run might me placed close to the top of the cooling compartment (610) such as the third level (653), or else directly onto the pipetting deck (612).

**Fig. 6D** provides a detailed display of a disassembled lid (620). While the upper part represents the lid (620) with its openings (621), there can also be seen a heating element (625) embodied as an inlay arranged underneath and in close proximity to the lid (620) covering the cooling compartment (610), the heating element (625) being configured to heat the lid (620) such that the temperature of the lid's (625) upper surface is above the dew point of the air outside the cooling compartment (610). The heating element (625) has openings (626) corresponding to and aligned with the openings (621) of the lid (620) such that, for instance, a pipetting needle can pass through the aligned openings (621, 626) in both lid (620) and heating element (625). In an assembled configuration, the heating element (625) in this embodiment is arranged in direct physical contact to the lower surface of the lid (620) and thereby efficiently transfers thermal energy to the lid (620) in order to prevent condensation on its outside. The heating element (625) is powered via a power connector (627) connected to a power source, for example, integral to the control unit or a temperature controller.

**Fig. 6E** depicts the complete cooling system (600) including a pipettor (630) arranged above the cooling compartment (610), the pipettor (630) being configured to aspirate reagent from the reagent container (640) through the openings (621) of the lid (620) covering the cooling compartment (610). The pipettor (630) of this embodiment comprises a head (631) to which a pipetting needle (632) is mounted. The drawing on the right-hand side of Fig. 6E provides a zoomed-in view of the region on the left-hand side drawing marked with a circle. In the detailed view, it can be gathered that corresponding parts of the lid (620) and the reagent container (640) have been omitted so as to provide an unobstructed view of the pipetting needle (632) inserted into a designated opening (641) in the top of the reagent container (640).

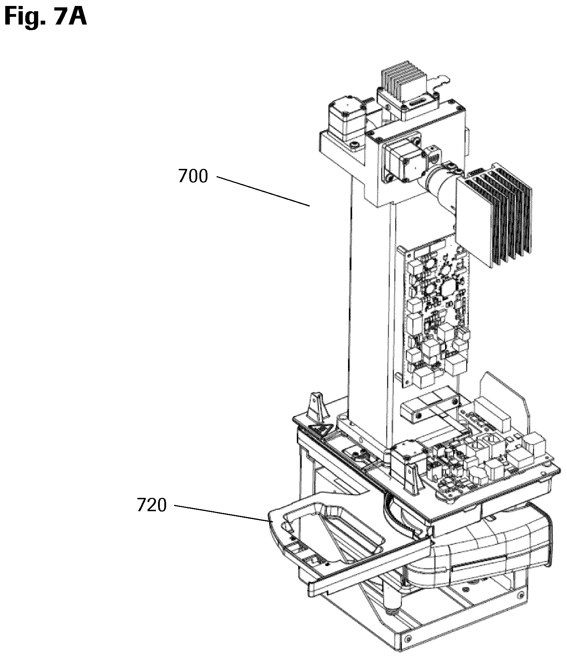

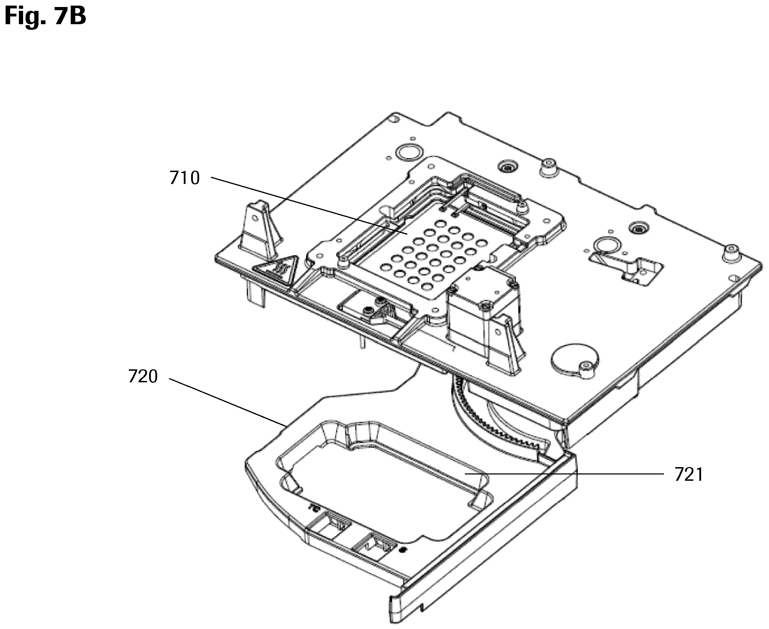

A further aspect of the automated analytical system (1) disclosed herein not part of the presently claimed invention is shown in the drawings of **Fig. 7****,** namely a thermal cycler (700) for incubating biological samples. Readily isolated biological target material such as nucleic acids may be transferred from a separation station to an amplification and detection module comprising the said thermal cycler (700) including a mount (710) configured to receive and hold a microwell plate, a loading platform (720) configured to transport the microwell plate towards and away from the mount (710), the loading platform (720) being rotatable between a loading position and an incubation position. The thermal cycler (700) also comprises a motor such as a stepper motor configured to rotate the loading platform (720) between the loading position and the incubation position.

**Fig. 7A** shows a complete view of the thermal cycler (700) with its loading platform (720) in the loading position, i.e., rotated away from the mount and thus accessible for a multiwell plate.

Turning to **Fig. 7B****,** a more detailed view of the loading mechanism of the same embodiment is provided including the mount (710) of the thermal cycler (700). The loading platform (720), still in its loading position, comprises a receiving tray (721) for receiving and holding a multiwell plate (not shown) which may, once inserted by a gripper or other suitable transfer means, be rotated into the incubation position in which the multiwell plate engages the mount (710) for suitable thermal contact.

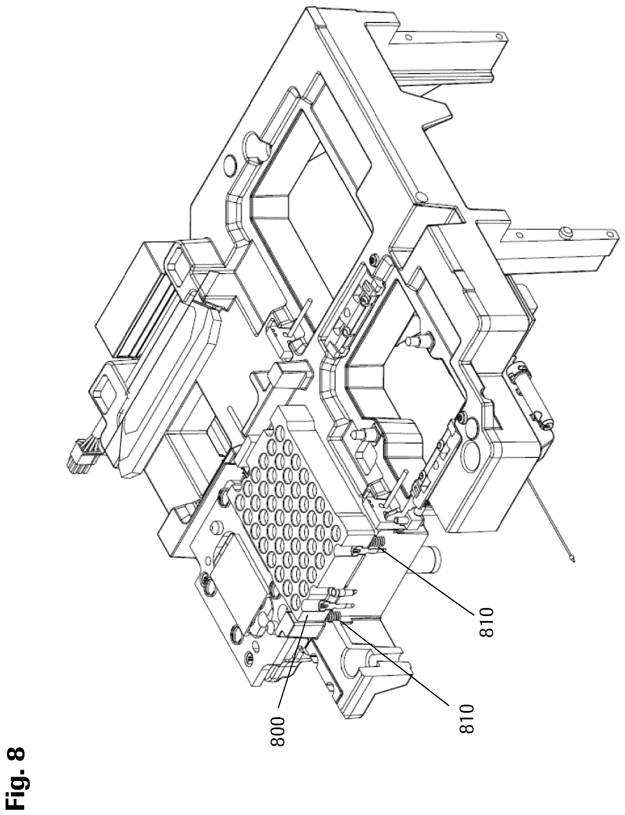

**Fig. 8** features a depiction of a flexibly mounted pipet tip rack (800), wherein the rack (800) is mounted onto a working surface (820) of an automated analytical system (1) via one or more flexible elements (810) arranged between the rack (800) and the working surface (820). The flexible elements (810) are springs attached to the bottom at the four corners of the rectangular pipet tip rack (800), thereby providing flexibility of the rack (800) in a vertical direction, for example, to compensate for an inhomogeneously applied force by a pipetting head.

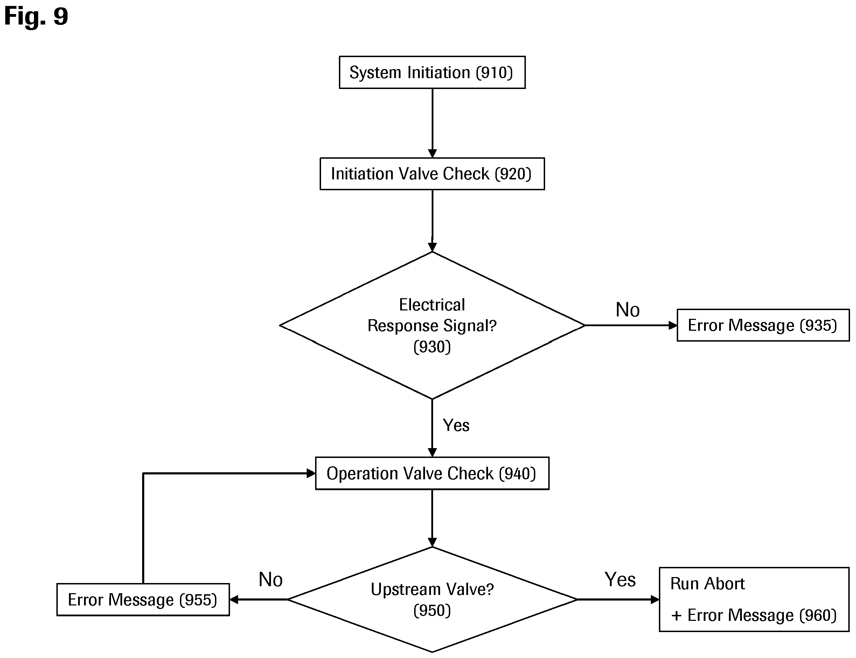

**Fig. 9** depicts the steps of the method for monitoring a valve system in an automated analytical system (1), as described herein, by means of a flowchart.

The steps are described according to the following:
Firstly, initiating the automated analytical system by switching on a power supply (910).

Secondly, performing, during or directly following the initiation process, an initiation valve check (920) of the operational status of a valve, wherein the check comprises sending an electrical probing signal to the valve from a control unit and detecting the presence or absence of an electrical response signal (930) by the control unit, wherein the absence of the electrical response signal indicates that the valve is not operational and an error message (935) is created, and the presence of the response signal indicates that the valve is operational, and the method may proceed.

Thirdly, an operation valve check (940) in a fully initiated mode of the automated analytical system (1), and repeatedly performing the check based on the electrical probing signal on a valve in an idle state.

Fourthly, based on an assessment whether the check is performed on a upstream valve and thus potentially influencing the sample (950), creating an error message in case the valve is a downstream valve and thus does not affect the sample (955), then continuing operation of the valve system and performing further iterations of the operation valve check (940), or creating an error message and additionally aborting the current run in case the valve is an upstream valve (960). By aborting a running experiment in the case of a thus identified defective valve, sample material may be rescued.

In general, modifications and variations of all disclosed embodiments are possible in light of the above description. It is therefore to be understood, that within the scope of the appended claims, the invention may be practiced otherwise than as specifically devised in the above examples. Reference throughout the preceding specification to "one embodiment", "an embodiment", "one example" or "an example", means that a particular feature, structure or characteristic described in connection with the embodiment or example is included in at least one embodiment. Thus, appearances of the phrases "in one embodiment", "in an embodiment", "one example" or "an example", in various places throughout this specification are not necessarily all referring to the same embodiment or example.

Furthermore, the particular features, structures, or characteristics may be combined in any suitable combinations and / or sub-combinations in one or more embodiments or examples.

## Claims

1. A method for introducing a sample rack (210) holding a plurality of sample receptacles (215) into a sample receiving bay (200) in a housing (100) of an automated analytical system (1), the method comprising:
a) manually moving the sample rack (210) from a loading position towards a processing position along a lane (230) in the sample receiving bay (200);
b) pausing the movement when the sample rack (210) arrives at a focusing position defined by a proximal stopping element (240) between the loading position and the processing position;
c) moving a reader (220) within essentially the same horizontal plane as the lane (230) to focus the reader (220) onto the lane (230); the proper focused is detected and indicated to the user by a signal such as to prompt the user to resume the movement;
d) resuming the movement of the sample rack (210) past the proximal stopping element (240) and detecting features of the sample rack (210) and/or the plurality of sample receptacles (215) by the reader (220) during the movement, until the sample rack (210) reaches the processing position defined by a distal stopping element (250);
e) positioning, detecting and locking the sample rack (210) in the processing position;
f) processing the content of the sample receptacles (215).

2. The method of claim 1, wherein the proximal stopping element (240) is selected from the group of a baffle, a depression in or protrusion from the bottom of the lane, an injection-molded part, a stop lug, a spherical piece, a bolt, a magnet, a catch pin, a catch plate, or a hook.

3. The method of any of the preceding claims, wherein the reader (220) is selected from the group of a barcode reader, a camera, or an RFID reader.

4. The method of any of the preceding claims, wherein the reader (220) is a movable camera.

5. The method of any of the preceding claims, wherein a sensor detects that the sample rack (210) is in the focusing position and triggers sending of a signal to the reader (220).

6. The method of any of the preceding claims, wherein the positioning and the locking of the sample rack (210) in the processing position comprises alignment of the sample rack (210) with respect to all six degrees of freedom.

7. An automated analytical system (1) for processing biological samples, the system (1) comprising:
- a housing (100)
- a sample rack (210) configured to hold a plurality of sample receptacles (215);
- a sample receiving bay (200) within said housing (100), the sample receiving bay (200) having a plurality of lanes (230) arranged substantially parallel to each other and configured to accommodate the sample rack (210) configured to hold a plurality of sample receptacles (215);
- a proximal stopping element (240) defining a focusing position on a lane (230);
- a reader (220) within essentially the same horizontal plane as the lanes (230);
- wherein the reader comprises a control unit configured to indicate to the user that the proper focusing is detected, wherein the indication is via an optical signal or an acoustic signal;
- a distal stopping element (250) defining a processing position on a lane (230);
- a positioning element (260) configured to position the sample rack (210) in the processing position;
- a detecting element (270) configured to detect the sample rack (210) in the processing position;
- a locking element (280) configured to lock the sample rack (210) in the processing position;
- a processing module configured to process the biological samples in the sample receptacles (215).

8. The automated analytical system (1) of claim 7, further comprising
- an indicator system (300) arranged along each of the lanes (230) in alignment with dedicated sample receptacle slots (212) of a sample rack (210) when the sample rack (210) is located in an inspection position, wherein the indicator system (300) is configured to indicate a status of sample receptacles (215) in their respective sample receptacle slots (212).

9. The automated analytical system (1) of claim 8, wherein the indicator system (300) comprises a light source (301) on or within the lane (230), the light source (301) being optically coupled via an optical light guiding system (303) to light emission windows (302) located in close proximity to the dedicated sample receptacle positions (212) of the sample rack (210).

10. The automated analytical system (1) of claim 9, wherein the light source (301) comprises several individual light sources (3011), each of the individual light sources (3011) being optically coupled via the optical light guiding system (303) to the light emission windows (302).

11. The automated analytical system (1) of claim 10, wherein the individual light sources (3011) are positioned essentially underneath the dedicated sample receptacle positions (212) of the sample rack (210).

12. The automated analytical system (1) of claim 11, wherein the number of the individual light sources (3011) along a lane (230) matches the number of dedicated sample rack positions (212) and/or light emission windows (302) of the sample rack (210).

13. The automated analytical system (1) of claim 7, further comprising:
- a moveable platform (350) configured to be extended horizontally out of the housing (100) so as to form an extension of the plurality of lanes (230) outside of the housing (100), the platform (350) having positioning elements (352) configured to position a sample rack (210) on the platform (350) in an exposed inspection position;
- an indicator system (300) arranged along each of the extended lanes (230) in alignment with dedicated sample receptacle slots (212) of a sample rack (210) when the sample rack (210) is located in the exposed inspection position, wherein the indicator system (300) is configured to indicate a status of sample receptacles (215) in their respective sample receptacle slots (212).

## Patentansprüche

1. Verfahren zum Einführen eines Probengestells (210), das eine Vielzahl von Probenaufnahmebehältern (215) hält, in ein Probenaufnahmefach (200) in einem Gehäuse (100) eines automatisierten Analysesystems (1), wobei das Verfahren Folgendes umfasst:
a) manuelles Bewegen des Probengestells (210) von einer Ladeposition in eine Verarbeitungsposition entlang einer Bahn (230) in dem Probenaufnahmefach (200);
b) Unterbrechen der Bewegung, wenn das Probengestell (210) an einer Fokussierposition ankommt, die durch ein proximales Stoppelement (240) zwischen der Ladeposition und der Verarbeitungsposition definiert ist;
c) Bewegen eines Lesegeräts (220) innerhalb im Wesentlichen derselben horizontalen Ebene wie die Bahn (230), um das Lesegerät (220) auf die Bahn (230) zu fokussieren; wobei der richtige Fokus erfasst und dem Benutzer durch ein Signal angezeigt wird, um den Benutzer aufzufordern, die Bewegung fortzusetzen;
d) Fortsetzen der Bewegung des Probengestells (210) an dem proximalen Stoppelement (240) vorbei und Erfassen von Merkmalen des Probengestells (210) und/oder der Vielzahl von Probenaufnahmebehältern (215) durch das Lesegerät (220) während der Bewegung, bis das Probengestell (210) die Verarbeitungsposition erreicht, die durch ein distales Stoppelement (250) definiert ist;
e) Positionieren, Erfassen und Verriegeln des Probengestells (210) in der Verarbeitungsposition;
f) Verarbeiten des Inhalts der Probenaufnahmebehälter (215).

2. Verfahren nach Anspruch 1, wobei das proximale Stoppelement (240) ausgewählt ist aus der Gruppe aus einer Ablenkplatte, einer Vertiefung in dem Boden der Bahn oder einem Vorsprung von dem Boden der Bahn, einem spritzgegossenen Teil, einer Anschlagnase, einem sphärischen Teil, einem Bolzen, einem Magneten, einem Raststift, einer Rastplatte oder einem Haken.

3. Verfahren nach einem der vorhergehenden Ansprüche, wobei das Lesegerät (220) ausgewählt ist aus der Gruppe aus einem Strichcode-Lesegerät, einer Kamera oder einem RFID-Lesegerät.

4. Verfahren nach einem der vorhergehenden Ansprüche, wobei das Lesegerät (220) eine bewegliche Kamera ist.

5. Verfahren nach einem der vorhergehenden Ansprüche, wobei ein Sensor erfasst, dass sich das Probengestell (210) in der Fokussierposition befindet, und das Senden eines Signals an das Lesegerät (220) auslöst.

6. Verfahren nach einem der vorhergehenden Ansprüche, wobei das Positionieren und das Verriegeln des Probengestells (210) in der Verarbeitungsposition das Ausrichten des Probengestells (210) in Bezug auf alle sechs Freiheitsgrade umfasst.

7. Automatisiertes Analysesystem (1) zur Verarbeitung biologischer Proben, wobei das System (1) Folgendes umfasst:
- ein Gehäuse (100);
- ein Probengestell (210), das konfiguriert ist, um eine Vielzahl von Probenaufnahmebehältern (215) zu halten;
- ein Probenaufnahmefach (200) innerhalb des Gehäuses (100), wobei das Probenaufnahmefach (200) eine Vielzahl von Bahnen (230) aufweist, die im Wesentlichen parallel zueinander angeordnet sind und konfiguriert sind, um das Probengestell (210) aufzunehmen, das konfiguriert ist, um eine Vielzahl von Probenaufnahmebehältern (215) zu halten;
- ein proximales Stoppelement (240), das eine Fokussierposition auf einer Bahn (230) definiert;
- ein Lesegerät (220) innerhalb im Wesentlichen derselben horizontalen Ebene wie die Bahnen (230);
- wobei das Lesegerät eine Steuereinheit umfasst, die konfiguriert ist, um dem Benutzer anzuzeigen, dass der richtige Fokus erfasst wird, wobei die Anzeige über ein optisches Signal oder ein akustisches Signal erfolgt;
- ein distales Stoppelement (250), das eine Verarbeitungsposition auf einer Bahn (230) definiert;
- ein Positionierungselement (260), das konfiguriert ist, um das Probengestell (210) in der Verarbeitungsposition zu positionieren;
- ein Erfassungselement (270), das konfiguriert ist, um das Probengestell (210) in der Verarbeitungsposition zu erfassen;
- ein Verriegelungselement (280), das konfiguriert ist, um das Probengestell (210) in der Verarbeitungsposition zu verriegeln;
- ein Verarbeitungsmodul, das konfiguriert ist, um die biologischen Proben in den Probenaufnahmebehältern (215) zu verarbeiten.

8. Automatisiertes Analysesystem (1) nach Anspruch 7, ferner umfassend
- ein Indikatorsystem (300), das entlang jeder der Bahnen (230) in Ausrichtung mit dedizierten Probenaufnahmeschlitzen (212) eines Probengestells (210) angeordnet ist, wenn sich das Probengestell (210) in einer Inspektionsposition befindet, wobei das Indikatorsystem (300) konfiguriert ist, um einen Status von Probenaufnahmebehältern (215) in ihren jeweiligen Probenaufnahmeschlitzen (212) anzuzeigen.

9. Automatisiertes Analysesystem (1) nach Anspruch 8, wobei das Indikatorsystem (300) eine Lichtquelle (301) auf oder innerhalb der Bahn (230) umfasst, wobei die Lichtquelle (301) über ein optisches Lichtleitsystem (303) mit Lichtemissionsfenstern (302) optisch gekoppelt ist, die sich in unmittelbarer Nähe zu den dedizierten Probenaufnahmepositionen (212) des Probengestells (210) befinden.

10. Automatisiertes Analysesystem (1) nach Anspruch 9, wobei die Lichtquelle (301) mehrere einzelne Lichtquellen (3011) umfasst, wobei jede der einzelnen Lichtquellen (3011) über das optische Lichtleitsystem (303) mit den Lichtemissionsfenstern (302) optisch gekoppelt ist.

11. Automatisiertes Analysesystem (1) nach Anspruch 10, wobei die einzelnen Lichtquellen (3011) im Wesentlichen unter den dedizierten Probenaufnahmepositionen (212) des Probengestells (210) positioniert sind.

12. Automatisiertes Analysesystem (1) nach Anspruch 11, wobei die Anzahl der einzelnen Lichtquellen (3011) entlang einer Bahn (230) mit der Anzahl von dedizierten Probengestellpositionen (212) und/oder Lichtemissionsfenstern (302) des Probengestells (210) übereinstimmt.

13. Automatisiertes Analysesystem (1) nach Anspruch 7, ferner umfassend:
- eine bewegliche Plattform (350), die konfiguriert ist, um horizontal aus dem Gehäuse (100) ausgefahren zu werden, um eine Verlängerung der Vielzahl von Bahnen (230) außerhalb des Gehäuses (100) zu bilden, wobei die Plattform (350) Positionierungselemente (352) aufweist, die konfiguriert sind, um ein Probengestell (210) auf der Plattform (350) in einer freigelegten Inspektionsposition zu positionieren;
- ein Indikatorsystem (300), das entlang jeder der ausgefahrenen Bahnen (230) in Ausrichtung mit dedizierten Probenaufnahmeschlitzen (212) eines Probengestells (210) angeordnet ist, wenn sich das Probengestell (210) in der freigelegten Inspektionsposition befindet, wobei das Indikatorsystem (300) konfiguriert ist, um einen Status von Probenaufnahmebehältern (215) in ihren jeweiligen Probenaufnahmeschlitzen (212) anzuzeigen.

## Revendications

1. Procédé d'introduction d'un portoir d'échantillons (210) contenant une pluralité de récipients d'échantillons (215) dans une baie de réception d'échantillons (200) dans un boîtier (100) d'un système analytique automatisé (1), le procédé comprenant :
a) le déplacement de manière manuelle du portoir d'échantillons (210) d'une position de chargement vers une position de traitement le long d'une voie (230) dans la baie de réception d'échantillons (200) ;
b) l'interruption du déplacement lorsque le portoir d'échantillons (210) atteint une position de focalisation définie par un élément d'arrêt proximal (240) entre la position de chargement et la position de traitement ;
c) le déplacement d'un lecteur (220) essentiellement à l'intérieur du même plan horizontal que la voie (230) afin de focaliser le lecteur (220) sur la voie (230) ; la focalisation correcte est détectée et indiquée à l'utilisateur par un signal de manière à inviter l'utilisateur à reprendre le déplacement ;
d) la reprise du déplacement du portoir d'échantillons (210) au-delà de l'élément d'arrêt proximal (240) et la détection de caractéristiques du portoir d'échantillons (210) et/ou de la pluralité de récipients d'échantillons (215) par le lecteur (220) pendant le déplacement, jusqu'à ce que le portoir d'échantillons (210) atteigne la position de traitement définie par un élément d'arrêt distal (250) ;
e) le positionnement, la détection et le verrouillage du portoir d'échantillons (210) dans la position de traitement ;
f) le traitement du contenu des récipients d'échantillons (215).

2. Procédé selon la revendication 1, dans lequel l'élément d'arrêt proximal (240) est choisi dans le groupe constitué par un déflecteur, un renfoncement dans ou une saillie depuis le fond de la voie, une partie moulée par injection, un ergot d'arrêt, une pièce sphérique, un boulon, un aimant, une goupille de retenue, une plaque de retenue ou un crochet.

3. Procédé selon l'une quelconque des revendications précédentes, dans lequel le lecteur (220) est choisi dans le groupe constitué par un lecteur de code-barres, une caméra ou un lecteur RFID.

4. Procédé selon l'une quelconque des revendications précédentes, dans lequel le lecteur (220) est une caméra mobile.

5. Procédé selon l'une quelconque des revendications précédentes, dans lequel un capteur détecte que le portoir d'échantillons (210) se trouve dans la position de focalisation et déclenche l'envoi d'un signal au lecteur (220).

6. Procédé selon l'une quelconque des revendications précédentes, dans lequel le positionnement et le verrouillage du portoir d'échantillons (210) dans la position de traitement comprennent l'alignement du portoir d'échantillons (210) selon les six degrés de liberté.

7. Système analytique automatisé (1) pour le traitement d'échantillons biologiques, le système (1) comprenant :
- un boîtier (100)
- un portoir d'échantillons (210) configuré pour contenir une pluralité de récipients d'échantillons (215) ;
- une baie de réception d'échantillons (200) à l'intérieur dudit boîtier (100), la baie de réception d'échantillons (200) ayant une pluralité de voies (230) agencées sensiblement parallèlement les unes aux autres et configurées pour recevoir le portoir d'échantillons (210) configuré pour contenir une pluralité de récipients d'échantillons (215) ;
- un élément d'arrêt proximal (240) définissant une position de focalisation sur une voie (230) ;
- un lecteur (220) sensiblement à l'intérieur du même plan horizontal que les voies (230) ;
- dans lequel le lecteur comprend une unité de commande configurée pour indiquer à l'utilisateur que la focalisation correcte est détectée, dans lequel l'indication se fait par l'intermédiaire d'un signal optique ou d'un signal acoustique ;
- un élément d'arrêt distal (250) définissant une position de traitement sur une voie (230) ;
- un élément de positionnement (260) configuré pour positionner le portoir d'échantillons (210) dans la position de traitement ;
- un élément de détection (270) configuré pour détecter le portoir d'échantillons (210) dans la position de traitement ;
- un élément de verrouillage (280) configuré pour verrouiller le portoir d'échantillons (210) dans la position de traitement ;
- un module de traitement configuré pour traiter les échantillons biologiques dans les récipients d'échantillons (215).

8. Système analytique automatisé (1) selon la revendication 7, comprenant en outre
- un système indicateur (300) agencé le long de chacune des voies (230), en alignement avec des logements de récipients d'échantillons (212) dédiés d'un portoir d'échantillons (210) lorsque le portoir d'échantillons (210) se trouve dans une position d'inspection, dans lequel le système indicateur (300) est configuré pour indiquer un état des récipients d'échantillons (215) dans leurs logements de récipients d'échantillons (212) respectifs.

9. Système analytique automatisé (1) selon la revendication 8, dans lequel le système indicateur (300) comprend une source lumineuse (301) sur ou à l'intérieur de la voie (230), la source lumineuse (301) étant couplée optiquement par l'intermédiaire d'un système de guidage optique de lumière (303) à des fenêtres d'émission de lumière (302) situées à proximité immédiate des positions de récipients d'échantillons (212) dédiées du portoir d'échantillons (210).

10. Système analytique automatisé (1) selon la revendication 9, dans lequel la source lumineuse (301) comprend plusieurs sources lumineuses (3011) individuelles, chacune des sources lumineuses (3011) individuelles étant couplée optiquement par l'intermédiaire du système de guidage optique de lumière (303) aux fenêtres d'émission de lumière (302).

11. Système analytique automatisé (1) selon la revendication 10, dans lequel les sources lumineuses (3011) individuelles sont positionnées sensiblement au-dessous des positions de récipients d'échantillons (212) dédiées du portoir d'échantillons (210).

12. Système analytique automatisé (1) selon la revendication 11, dans lequel le nombre de sources lumineuses (3011) individuelles le long d'une voie (230) correspond au nombre de positions de récipients d'échantillons (212) dédiées et/ou de fenêtres d'émission de lumière (302) du portoir d'échantillons (210).

13. Système analytique automatisé (1) selon la revendication 7, comprenant en outre :
- une plateforme mobile (350) configurée pour être prolongée horizontalement hors du boîtier (100) de sorte à former un prolongement de la pluralité de voies (230) à l'extérieur du boîtier (100), la plateforme (350) ayant des éléments de positionnement (352) configurés pour positionner un portoir d'échantillons (210) sur la plateforme (350) dans une position d'inspection exposée ;
- un système indicateur (300) agencé le long de chacune des voies (230) prolongées en alignement avec les logements de récipients d'échantillons (212) dédiés d'un portoir d'échantillons (210) lorsque le portoir d'échantillons (210) se trouve dans la position d'inspection exposée, dans lequel le système indicateur (300) est configuré pour indiquer un état des récipients d'échantillons (215) dans leurs logements de récipients d'échantillons (212) respectifs.
